# EUROPÄISCHE PATENTSCHRIFT

(11) **EP 2 750 265 B1**
(45) Veröffentlichungstag und Bekanntmachung des Hinweises auf die Patenterteilung: **29.11.2017**
(21) Anmeldenummer: 12199514.6
(22) Anmeldetag: 27.12.2012
(51) Int. Cl.: H02K 5/22, F04D 13/06, H02K 11/00

(54) **Pumpenaggregat**
Pump power unit
Groupe motopompe

(43) Veröffentlichungstag der Anmeldung: 02.07.2014
(73) Patentinhaber: Grundfos Holding A/S, 8850 Bjerringbro (DK)
(72) Erfinder: Olsen, Michael Egelund, 8600 Silkeborg (DK); Schuldt, Christian, 23858 Reinfeld (DE)
(74) Vertreter: Patentanwälte Vollmann & Hemmer

(56) Entgegenhaltungen:
- EP-A1- 1 701 431
- EP-A1- 2 166 230
- EP-A2- 1 133 012
- WO-A2-2013/037449

## Beschreibung

Die Erfindung betrifft ein Pumpenaggregat mit den im Oberbegriff des Anspruchs 1 angegebenen Merkmalen.

Pumpenaggregate insbesondere Umwälzpumpenaggregate weisen üblicherweise ein Pumpengehäuse, in welchem zumindest ein Pumpenlaufrad angeordnet ist, und ein mit dem Pumpengehäuse verbundenes Motor- oder Statorgehäuse auf, in welchem ein elektrischer Antriebsmotor angeordnet ist. An der Außenseite des Statorgehäuses ist in der Regel ein Elektronikgehäuse bzw. ein Klemmenkasten angeordnet, in dem elektronische Bauteile zur Steuerung bzw. Regelung des Antriebsmotors untergebracht sind. Diese elektronischen Bauteile umfassen häufig Bauteile, welche sich im Betrieb stark erwärmen, beispielsweise Bauteile einer Leistungselektronik, wie eines Frequenzumrichters. Die erzeugte Wärme muss in geeigneter Weise nach außen angeführt werden.

EP 1 701 431 A1 offenbart einen Klemmenkasten für einen Elektromotor, welcher ein Gehäuseoberteil aufweist, welches mit einer Durchbrechung versehen ist, durch welche sich ein Wärmeleitkissen nach außen zu einem das Gehäuseoberteil übergreifenden metallischen Deckel erstreckt, so dass über das Wärmeleitkissen Wärme von einem im Inneren gelegenen elektronischen Bauteil auf den an der Außenseite gelegenen, als Wärmeverteiler fungierenden, Deckel übertragen werden kann. Diese Anordnung hat den Nachteil, dass die Wärmeabfuhr nach außen über das Wärmeleitkissen zu dem Deckel erfolgen muss, wodurch die Wärmeabfuhr dann, wenn die zu kühlenden elektronischen Bauteile nicht direkt unterhalb der Ausnehmung in dem Gehäuseoberteil liegen, beeinträchtigt werden kann.

EP 2 166 230 A1 offenbart ein Pumpenaggregat mit einem axial angeordneten Klemmenkasten, welcher stirnseitig durch einen metallischen Deckel verschlossen ist, welcher mit einem unter dem Deckel liegenden wärmeleitenden elektronischen Bauteil in Kontakt ist. Bei dieser Anordnung besteht die Schwierigkeit, dass das zu kühlende Bauteil im Bereich der durch den Deckel zu verschließenden Öffnung des Klemmenkastens gelegen sein muss.

Es ist Aufgabe der Erfindung, ein Pumpenaggregat dahingehend zu verbessern, dass die im Elektronikgehäuse entstehende Abwärme in verbesserter Weise nach außen abgeführt werden kann, und eine größere Freiheit bei der Anordnung der wärmeerzeugenden elektronischen Bauteile erreicht wird.

WO 2013/037449 A2, welche einen früheren Prioritätstag als die vorliegende Patentanmeldung aufweist, jedoch nachveröffentlicht ist, offenbart ein Pumpenaggregat mit einem Elektronikgehäuse, in welches ein Kühlblech derart eingespritzt ist, dass Abwärme aus dem Innenraum des Elektronikgehäuses nach außen abgeführt werden kann.

Diese Aufgabe wir durch ein Pumpenaggregat mit den in Anspruch 1 angegeben Merkmalen gelöst. Bevorzugte Ausführungsformen ergeben sich aus den Unteransprüchen, der Beschreibung sowie den Figuren.

Das erfindungsgemäße Pumpenaggregat weist wie bekannte Pumpenaggregate ein Motor- bzw. ein Statorgehäuse auf, in welchem ein elektrischer Antriebsmotor angeordnet ist. Dieser elektrische Antriebsmotor treibt zumindest ein Pumpenlaufrad an, welches in einem Pumpengehäuse angeordnet sein kann, welches mit dem Statorgehäuse verbunden ist. An der Außenseite des Statorgehäuses ist ein Klemmenkasten bzw. Elektronikgehäuse angeordnet, in welchem elektronische Bauteile insbesondere zur Steuerung bzw. Regelung des elektrischen Antriebsmotors untergebracht sind. Die elektronischen Bauteile können insbesondere eine Leistungselektronik eines Frequenzumrichters zur Ansteuerung bzw. Regelung des elektrischen Antriebsmotors aufweisen. Das Elektronikgehäuse ist durch eine Außenwandung begrenzt. Diese Außenwandung weist zumindest eine Öffnung auf. Dabei ist die Öffnung in einem Abschnitt der Außenwandung gelegen, welcher dem Statorgehäuse nicht zugewandt ist. Im Inneren des Elektronikgehäuses ist zumindest ein Wärmeverteiler bzw. Kühlkörper zur Abfuhr von Wärme von zumindest einem elektronischen Bauteil angeordnet. Dabei ist dieser Wärmeverteiler erfindungsgemäß so angeordnet, dass er an der Öffnung in der Außenwandung des Elektronikgehäuses gelegen ist. So wird es möglich, dass die Wärme von dem Wärmeverteiler durch die Öffnung nach außen abgeführt wird, ohne dass ein isolierendes Element wie die Außenwandung des Elektronikgehäuses die Wärmeabfuhr von dem Wärmeverteiler nach außen behindert. Gleichzeitig ermöglicht die Anordnung des Wärmeverteilers im Inneren des Elektronikgehäuses eine direkte und gut wärmeleitende Anbindung an das oder die zu kühlenden elektronischen Bauteile. So wird insgesamt die Wärmeabfuhr verbessert. Dadurch, dass die Öffnung in einem dem Statorgehäuse nicht zugewandten Bereich der Außenwandung des Elektronikgehäuses gelegen ist, wird sichergestellt, dass in diesem Bereich ein guter Luftaustausch zur Kühlung des Wärmeverteilers von außen gegeben ist. Darüber hinaus ist in diesem Bereich keine zusätzliche Erwärmung durch die Abwärme des Antriebsmotors in dem Statorgehäuse zu befürchten.

Das Elektronikgehäuse kann an einer Radialseite oder der Axialseite des Statorgehäuses bezogen auf die Längs- bzw. Drehachse des elektrischen Antriebsmotors, welche der Längsachse des Statorgehäuses entspricht, gelegen sein.

Das Elektronikgehäuse ist vorzugsweise als von dem Statorgehäuse unabhängiges Bauteil ausgebildet. Alternativ ist es jedoch denkbar, dass Teile des Elektronikgehäuses, insbesondere Teile einer Außenwandung des Elektronikgehäuses integral mit Teilen des Statorgehäuses ausgebildet sind, insbesondere einstückig aus Kunststoff geformt sind.

Besonders bevorzugt ist das Elektronikgehäuse axialseitig an das Statorgehäuse angesetzt und weist zumindest einen in radialer Richtung über den Außenumfang des Statorgehäuses auskragenden Abschnitt auf, wobei die Öffnung in einer Außenwandung des Elektronikgehäuses ausgebildet ist, welche an einer dem Statorgehäuse zugewandten Axialseite des Elektronikgehäuses im Bereich des auskragenden Abschnittes gelegen ist. Bei dieser Ausgestaltung ist der Bereich bzw. Abschnitt der Außenwandung, in der die Öffnung gelegen ist, zwar an einer der Axialseite des Statorgehäuses zugewandten Seite des Elektronikgehäuses ausgebildet, dennoch ist der Abschnitt selber, in welchem die Öffnung gelegen ist, dem Statorgehäuse nicht zugewandt, da er an dem radial über das Statorgehäuse auskragenden Abschnitt gelegen ist. D. h. die Öffnung ist radialseitig des Statorgehäuses so gelegen, dass sie vorzugsweise in Blickrichtung parallel zur Längsachse des Statorgehäuses gewandt bzw. gerichtet ist. So ist die Öffnung seitlich des Statorgehäuses gelegen und kann gut von Luft zur Kühlung des an der Öffnung gelegen Wärmeverteilers überströmt werden. Von der dem Statorgehäuse abgewandten Axialseite des Elektronikgehäuses her betrachtet, liegt die Öffnung jedoch dabei an der Rückseite des Elektronikgehäuses. Dies ist von Vorteil, wenn Bedien- und Anzeigeelemente an der axialen Stirnseite des Elektronikgehäuses, welche dem Statorgehäuse abgewandt ist, angeordnet werden sollen. So wird zum einen ausreichend Raum für die Bedien- und Anzeigeelemente gelassen, zum anderen liegt der Wärmeverteiler so in einem Bereich, welcher nicht zur Bedienung berührt werden muss, sodass die Verbrennungsgefahr für eine Bedienperson verringert ist. Darüber hinaus ist so der Wärmeverteiler von der Bedienseite des Pumpenaggregates her im Wesentlichen unsichtbar platziert.

Der Wärmeverteiler verschließt die Öffnung, wobei weiter bevorzugt zwischen dem Wärmeverteiler und der die Öffnung umgebenden Au-ßenwandung eine Dichtung angeordnet ist. So wird verhindert, dass in diesem Bereich Feuchtigkeit in das Innere des Elektronikgehäuses eindringen kann.

Der Wärmeverteiler ist weiter bevorzugt vollständig im Inneren des Elektronikgehäuses gelegen oder er erstreckt sich durch die Öffnung hindurch aus dem Inneren des Klemmenkastens nach außen. Wenn der Wärmeverteiler sich durch die Öffnung nach außen erstreckt und somit ein Teil des Wärmeverteilers außerhalb des Elektronikgehäuses gelegen ist, hat dies den Vorteil, dass eine noch bessere Wärmeabfuhr erreicht wird, da der außen gelegene Teil besser von Luft überströmt werden kann. So kann die Abwärme aus dem Inneren des Elektronikgehäuses optimiert nach außen mittels einer direkten wärmeleitenden Verbindung über den Wärmeverteiler abgeleitet werden. Wenn der Wärmeverteiler vollständig im Inneren des Elektronikgehäuses gelegen ist, kann er nur im Bereich des von der Öffnung gebildeten Fensters von Luft überströmt werden. Die vollständige Anordnung im Inneren des Elektronikgehäuses hat jedoch den Vorteil, dass keine Elemente des Wärmeverteilers störend nach außen über die Außenwandung des Elektronikgehäuses vorstehen, was zum einen die optische Gestaltung des Elektronikgehäuses verbessert und zum anderen die Gefahr der unbeabsichtigten Berührung eines heißen Wärmeverteilers verringert.

Der Wärmeverteiler ist vorzugsweise als Gussbauteil oder als Formteil aus Blech ausgebildet. Dabei handelt es sich weiter bevorzugt um ein Gussbauteil aus Metall, wie beispielsweise Aluminium, welches eine hohe Wärmeleitfähigkeit aufweist. Alternativ kann das Gussbauteil auch aus einem wärmeleitenden Kunststoff ausgebildet sein. Wenn der Wärmeverteiler als Formteil aus Blech ausgebildet ist, kann das Blech bevorzugt so geformt sein, dass es einen planen Abschnitt aufweist, welcher in wärmeleitender Verbindung mit dem zu kühlenden elektronischen Bauteil ist. Ferner kann das Blech dann in den anderen Bereichen teilweise gewellt oder strukturiert geformt sein, um die Oberfläche zur besseren Wärmeabfuhr zu vergrößern.

Der Wärmeverteiler liegt im Bereich der Öffnung zur Außenseite hin im Wesentlichen frei oder ist zu maximal 50 % seiner Grundfläche, welche der Fläche der Öffnung entspricht, überdeckt. So wird sichergestellt, dass eine ausreichende Luftzirkulation zur Kühlung des Wärmeverteilers gegeben ist.

Gemäß einer besonderen Ausführungsform der Erfindung kann ein Bereich des Wärmeverteilers im Inneren des Elektronikgehäuses wärmeleitend mit zumindest einem elektronischen Bauteil verbunden sein, wobei dieser Bereich zumindest teilweise außerhalb der Außenkontur der Öffnung gelegen ist. Dies hat den Vorteil, dass das zu kühlende elektronische Bauteil bzw. die zu kühlenden elektrischen Bauteil im Inneren des Elektronikgehäuses nicht direkt unter der Öffnung angeordnet werden muss. Darüber hinaus ermöglicht diese Ausgestaltung den Wärmeverteiler im Bereich der Öffnung so zu strukturieren, dass er eine große Oberfläche zur verbesserten Wärmeabfuhr aufweist und gleichzeitig den Beriech, in welchem der Kontakt mit dem elektronischen Bauteil hergestellt wird, plan auszubilden. Dies ist insbesondere dann von Vorteil, wenn der Wärmeverteiler als Formteil aus Blech ausgebildet wird.

Gemäß einer weiteren bevorzugten Ausführungsform ist der Wärmeverteiler an der Außenseite des Elektronikgehäuses beabstandet von dem Statorgehäuse gelegen. So wird verhindert, dass von dem Statorgehäuse zusätzliche Abwärme aus dem elektrischen Antriebsmotor auf den Wärmeverteiler übertragen wird. So wird eine optimierte Kühlung des Wärmeverteilers durch die Umgebungsluft sichergestellt. Besonders bevorzugt ist der Wärmeverteiler radial beabstandet zu dem Statorgehäuse angeordnet. Dies gilt vor allem dann, wenn der Wärmeverteiler an der dem Statorgehäuse zugewandten Axialseite eines axial an das Statorgehäuse angeordneten Elektronikgehäuses gelegen ist, d. h. in einem radial auskragenden Abschnitt eines solches Elektronikgehäuses, wie es vorangehend beschrieben wurde.

Gemäß einer weiteren speziellen Ausführungsform der Erfindung kann die Außenwandung des Elektronikgehäuses, in welcher die Öffnung ausgebildet ist, eine ins Innere des Elektronikgehäuses ragende Stufe bzw. eine Einbuchtung aufweisen, in welcher die Öffnung gelegen ist. Dies hat den Vorteil, dass die Öffnung weiter ins Innere des Elektronikgehäuses hinein verlagert werden kann, sodass die Öffnung in die Nähe eines dort gelegen elektronischen Bauteils gebracht werden kann. So kann das elektronische Bauteil möglichst nahe an der Öffnung platziert werden, um die anfallende Abwärme dann möglichst direkt über den Wärmeverteiler nach außen abführen zu können.

Ferner kann die Stufe bzw. Einbuchtung an der Außenseite des Elektronikgehäuses einen Raum bilden, in welchem zumindest ein Teil des Wärmeverteilers gelegen ist, welcher sich durch die Öffnung hindurch nach außen erstreckt. So bildet die Stufe vorzugsweise an der Außenseite des Elektronikgehäuses eine erste Einbuchtung, in welcher der Wärmeverteiler gelegen ist. Diese Ausgestaltung hat den Vorteil, dass der Wärmeverteiler so angeordnet und ausgestaltet werden kann, dass, obwohl ein Teil des Wärmeverteilers außerhalb des Innenraumes des Elektronikgehäuses gelegen ist, der Wärmeverteiler im Wesentlichen nicht über die Gesamt-Außenkontur des Elektronikgehäuses hervorsteht, sodass die Ästhetik des Elektronikgehäuses verbessert wird. Darüber hinaus werden so vorstehende Bauteile vermieden, welche bei der Montage leicht beschädigt werden könnten. Vorzugsweise ist der au-ßenhalb des Elektronikgehäuses gelegene Teil des Wärmeverteilers somit vollständig innerhalb der Einbuchtung gelegen, welche von der Stufe gebildet wird.

Besonders bevorzugt ist der Wärmeverteiler vollständig innerhalb der axialen Erstreckung einer Umfangswandung des Elektronikgehduses gelegen. Diese äußere Umfangswandung kann sich auch um die Einbuchtung herum erstrecken, sodass der Wärmeverteiler sich nicht über die Umfangswandung hinaus erstreckt. Bei der vorangehend beschriebenen bevorzugten Ausgestaltung, bei welcher der Wärmeverteiler in einem radial auskragenden Abschnitt eines axialseitig an das Statorgehäuse angeordneten Elektronikgehäuses gelegen ist, kann so erreicht werden, dass der Wärmeverteiler, obwohl er sich durch die Öffnung in dem Klemmenkasten nach außen erstreckt, sich in axialer Richtung nicht über die axiale Erstreckung der Umfangswandung hinaus erstreckt. Die Umfangswandung ist dabei diejenige Wandung des Elektronikgehäuses, welche sich quer zu den Axialseiten des Klemmenkastens erstreckt, d. h. sich um die Längsachse des Statorgehäuses und des Elektronikgehäuses, vorzugsweise parallel zu dieser herum erstreckt. Die Umfangswandung definiert dabei die Gesamt-Außenkontur des Elektronikgehäuses.

Gemäß einer weiteren bevorzugten Ausführungsform liegt der Wärmeverteiler im Inneren des Elektronikgehäuses an zumindest einem elektronischen Bauteil wärmeleitend an, welches an einer Leiterplatte angeordnet ist, wobei sich die Leiterplatte vorzugsweise im Wesentlichen parallel zu der Außenwandung des Klemmenkastens, in welcher die Öffnung ausgebildet ist, erstreckt. Vorzugsweise handelt es sich dabei um eine axialseitige Außenwandung des Elektronikgehäuses, welche an die Axialseite des Statorgehäuses angrenzt. Vorzugsweise ist die Außenwandung, in welcher die Öffnung ausgebildet ist, ein Boden des Elektronikgehäuses, welcher dem Statorgehäuse zugewandt ist, wobei die Öffnung in einem Teil des Bodens gelegen ist, welcher seitlich bzw. radial über das Statorgehäuse auskragt, sodass die Öffnung dem Statorgehäuse nicht zugewandt ist.

Weiter bevorzugt ist seitlich der vorangehend beschriebenen, in das Innere des Elektronikgehäuses ragenden Stufe im Inneren des Elektronikgehäuses ein Aufnahmeraum vorhanden, in welchem die Außenwandung des Elektronikgehäuses in axialer Richtung weiter von einer im Elektronikgehäuse gelegenen Leiterplatte beabstandet ist als im Bereich der Stufe und in welchem zumindest ein elektronisches Bauteil mit größere Bauhöhe angeordnet ist. Es handelt sich dabei vorzugsweise um eine Außenwandung, welche sich parallel zu der Leiterplatte beabstandet zu dieser erstreckt und in welcher die beschriebene Öffnung angeordnet ist. Durch diese gestufte Ausgestaltung der Außenwandung wird erreicht, dass zum einen an der Außenseite des Elektronikgehäuses eine Einbuchtung bzw. ein Freiraum zur Aufnahme des Wärmeverteilers geschaffen wird und zum anderen im Innenraum die Leiterplatte möglichst nahe an der Öffnung angeordnet werden kann, gleichzeitig jedoch die Möglichkeit verbleibt, auf der Leiterplatte Bauteile größerer Bauhöhe, wie beispielsweise einen Kondensator, anzuordnen. Diese sind dann in dem seitlich der Öffnung gelegenen Aufnahmeraum gelegen, in welchem das Elektronikgehäuse über der Leiterplatte eine größere Höhe bzw. einen größeren Freiraum bereitstellt.

Der Aufnahmeraum ist weiter bevorzugt zwischen der Stufe und einer Umfangswandung des Elektronikgehäuses vorzugsweise an einer der Dreh- bzw. Längsachse des Antriebsmotors abgewandten Seite der Stufe gelegen. Es gilt insbesondere dann, wenn die Öffnung mit dem Wärmeverteiler in einem Elektronikgehäuse angeordnet ist, welches axialseitig an das Statorgehäuse angesetzt ist. Dann kann der Aufnahmeraum in einem radial auskragenden Abschnitt des Elektronikgehäuses in dem Bereich, welcher am weitesten von der Längs- bzw. Drehachse des Statorgehäuses beabstandet ist, gelegen sein. Die Öffnung mit dem Wärmeverteiler liegt dann in radialer Richtung gesehen, zwischen dem Aufnahmeraum und der Außenwandung des Statorgehäuses. Diese Ausgestaltung hat den Vorteil, dass der axialseitig über dem Stator gelegene Bereich des Elektronikgehäuses für die Verbindungen, insbesondere auch die elektrischen Verbindungen zwischen Elektronikgehäuse und Statorgehäuse frei bleibt.

Gemäß einer weiteren bevorzugten Ausführungsform ist bei dem erfindungsgemäßen Pumpenaggregat ein Anschlusselement vorgesehen, welches einen ersten Steckverbinder aufweist, welcher mit einem korrespondierenden Steckkontakt bzw. einer korrespondierenden Steckkupplung an einer im Inneren des Elektronikgehäuses angeordneten Leiterplatte verbunden ist und einen zweiten Steckverbinder aufweist, welcher zum Anschluss einer elektrischen Anschlussleitung vorgesehen ist, wobei das Anschlusselement vorzugsweise an einer Außenseite des Elektronikgehäuses angeordnet ist und mit seinem ersten Steckverbinder durch eine Öffnung in eine Außenwandung des Elektronikgehäuses in dessen Inneres eingreift. Dieses Anschlusselement stellt somit den elektrischen Anschluss des Pumpenaggregates zwischen einer elektrischen Anschlussleitung, insbesondere einer Netzanschlussleitung und den elektronischen Bauteilen an der Leiterplatte her. Gemäß dieser Ausführungsform ist somit kein Anschlussstecker direkt an der Leiterplatte anzubringen, vielmehr ist das zwischengeschaltete elektrische Anschlusselement vorgesehen. Das zusätzliche elektrische Anschlusselement bietet mehrere Vorteile. So kann zum einen mithilfe dieses Anschlusselementes eine leichte Anpassung an verschiedene Anschlussnormen geschaffen werden, da beispielsweise der zweite Steckverbinder an dem Anschlusselemente bei unterschiedlichen Anschlusselementen unterschiedlich gestaltet werden kann, während der erste Steckverbinder immer gleich ausgebildet ist. Somit dient das Anschlusselement dann als eine Art Adapter. Darüber hinaus wird durch das Anschlusselement verhindert, dass eine Anschlussleitung direkt mit der Leiterplatte oder dort angeordneten Anschlusselementen verbunden werden muss. So kann eine Beschädigung der Leiterplatte beim Anschluss verhindert werden. Ferner kann durch das Anschlusselement sehr leicht der zweite Steckkontakt in eine gut von außen zugängliche Position gebracht werden, ohne dass die Leiterplatte für den elektrischen Anschluss optimiert im Inneren des Elektronikgehäuses platziert werden müsste. So ergeben sich mehr Freiheiten für die Anordnung der Leiterplatte in dem Elektronikgehäuse. Bei der Anordnung der Anschlusselemente an der Außenseite des Elektronikgehäuses besteht darüber hinaus der Vorteil, dass eine Anschlussleitung bzw. ein Anschlussstecker überhaupt nicht in das Innere des Elektronikgehäuses eingeführt werden muss, sodass eine bessere Abdichtung des Elektronikgehäuses im Bereich des elektrischen Anschlusses erreicht werden kann. Schließlich bildet das zusätzliche Anschlusselement eine kostengünstige Alternative zu elektrischen Leiterbahnen, welche in die Wandung des Elektronikgehäuses eingegossen sind. So kann auf solche Leiterbahnen verzichtet werden, dennoch kann eine einfache Kontaktierung der Leiterplatte allein durch Steckverbindungen realisiert werden.

Das beschriebene Anschlusselement ist vorzugsweise als Formteil aus Kunststoff gefertigt und dabei eigen- bzw. formstabil ausgebildet. So nimmt das Anschlusselement im Unterscheid zu einem Kabel stets eine definierte Form und Lage ein, wodurch die sichere Montage begünstigt wird. Im Inneren des Anschlusselementes sind vorzugsweise in das Kunststoffmaterial des Anschlusselementes eingegossene Leiterbahnen vorhanden, welche den ersten und den zweiten Steckverbinder des Anschlusselementes miteinander verbinden.

Weiter bevorzugt weist eine Außenwandung des Elektronikgehäuses eine nach innen gerichtete zweite Einbuchtung auf, in welcher das Anschlusselement angeordnet ist, wobei die Einbuchtung vorzugsweise an einer Ecke des Elektronikgehäuses gelegen ist. So können die Einbuchtung und das Anschlusselement so ausgestaltet sein, dass das Anschlusselement sich, wenn es in der Einbuchtung gelegen ist, in die übrige Außenkontur des Elektronikgehäuses einfügt und bevorzugt über die von dem Elektronikgehäuse definierte Außenkontur nicht nach außen vorsteht. So wird ein harmonischer Gesamteindruck gewährleistet. Die Anordnung der Einbuchtung an der Ecke des Elektronikgehäuses hat den Vorteil, dass das Anschlusselement an der Ecke gut zugänglich platziert werden kann, sodass der zweite Steckverbinder, an welchem die Anschlussleitung angeschlossen wird, gut zugänglich ist. Bei der Ausführungsform, bei welcher ein Elektronikgehäuse axialseitig an das Statorgehäuse angeordnet ist und einen radial über das Statorgehäuse auskragenden Abschnitt aufweist, ist die Einbuchtung vorzugsweise in diesem radial auskragenden Abschnitt gelegen, sodass das Anschlusselement ebenfalls in dem auskragenden Bereich seitlich des Statorgehäuses gut zugänglich gelegen ist.

Gemäß einer weiteren bevorzugten Ausführungsform ist der Wärmeverteiler mit einem Erdungskontakt mit einer im Inneren des Elektronikgehäuses gelegenen Leiterplatte bzw. einem auf dieser ausgebildeten Erdungsleiter elektrisch leitend verbunden, wobei diese Verbindung insbesondere über eine Schraube hergestellt werden kann. Auf der Leiterplatte ist dabei zumindest ein Erdungsleiter ausgebildet, welcher vorzugsweise über einen entsprechenden Steckkontakt mit dem vorangehend beschriebenen Anschlusselement und über dieses mit dem Erdungsleiter einer Anschlussleitung verbunden ist. Die Erdungsverbindung des Wärmeverteilers über die Leiterplatte hat den Vorteil, dass auf einen zusätzlichen Erdungsleiter im Inneren des Elektronikgehäuses verzichtet werden kann, sodass die Montage vereinfacht wird. Die Leiterplatte erstreckt sich ohnehin in die Nähe des Wärmeverteilers, da dieser mit zumindest einem elektronischen Bauteil an der Leiterplatte in Wärme leitender Verbindung ist.

Bei dem erfindungsgemäßen, vorangehend beschriebenen Pumpenaggregat handelt es sich besonders bevorzugt um ein Umwälzpumpenaggregat, beispielsweise ein Heizungsumwälzpumpenaggregat oder ein Umwälzpumpenaggregat für eine Klimaanlage oder zur Umwälzung von Brauchwasser. Der elektrische Antriebsmotors ist vorzugsweise als nasslaufender Antriebsmotor, d. h. als Spaltrohrmotor ausgebildet.

Nachfolgend wird die Erfindung beispielhaft anhand der beigefügten Figuren beschrieben. In diesen zeigt:
- Fig. 1: eine Seitenansicht eines erfindungsgemäßen Pumpenaggregates,
- Fig. 2: eine um 90° gedrehte Seitenansicht des Pumpenaggregates gemäß Fig. 1,
- Fig. 3: eine Draufsicht auf das Pumpenaggregat gemäß Figuren 1 und 2,
- Fig. 4: das Elektronikgehäuse des Pumpenaggregates gemäß Figuren 1 - 3 in teilweise explodierter Darstellung,
- Fig. 5: das Elektronikgehäuse gemäß Fig. 4 im geöffneten Zustand,
- Fig. 6: vergrößert den Ausschnitt VI aus Fig. 5,
- Fig. 7: vergrößert den Ausschnitt VII aus Fig. 5,
- Fig. 8: das geöffnete Elektronikgehäuse gemäß Figuren 4 - 7 mit entnommener Leiterplatte,
- Fig. 9: das Elektronikgehäuse gemäß Fig. 8 in explodierter Darstellung,
- Fig. 10: das Elektronikgehäuse gemäß Fig. 5 in explodierter Darstellung,
- Fig. 11: eine Ansicht des Elektronikgehäuses gemäß Fig. 4 - 10 von der Unterseite,
- Fig. 12: eine Schnittansicht des Pumpenaggregates gemäß Figuren 1 - 3,
- Fig. 13: eine Explosionsansicht des Pumpenaggregates gemäß Fig. 12,
- Fig. 14: eine Elektronikeinheit eines Pumpenaggregates gemäß einer zweiten Ausführungsform der Erfindung in teilweise explodierter Darstellung,
- Fig. 15: die Elektronikeinheit gemäß Fig. 14 im zusammengeführten Zustand,
- Fig. 16: die Elektronikeinheit gemäß Fig. 14 und 15 mit dem Unterteil eines Elektronikgehäuses in explodierter Darstellung,
- Fig. 17: den Deckel des Elektronikgehäuses gemäß Figuren 15 in perspektivischer Darstellung,
- Fig. 18: eine Schnittansicht des Deckels gemäß Fig. 16,
- Fig. 19: vergrößert den Ausschnitt XIX aus Fig. 17 und
- Fig. 20: die Anordnung des Elektronikgehäuses der Ausführungsform gemäß Fig. 13 - 19 an einem Statorgehäuse.

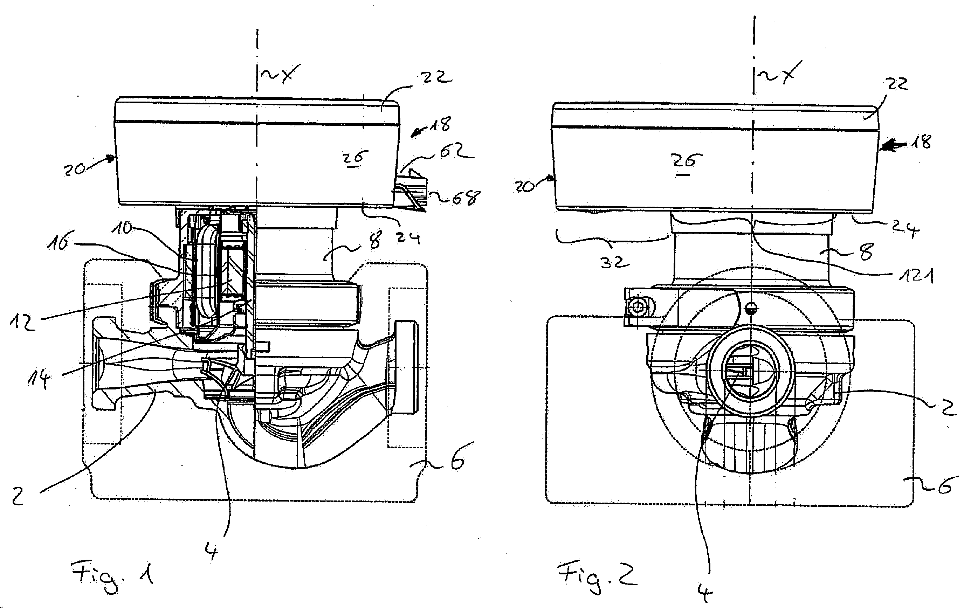

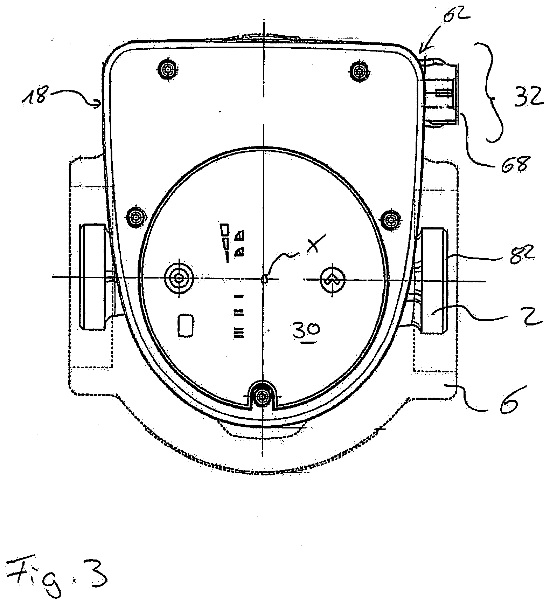

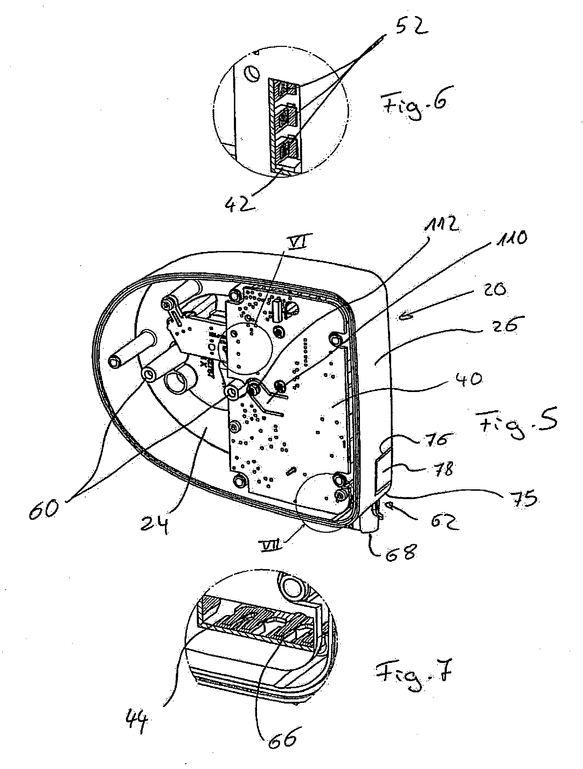

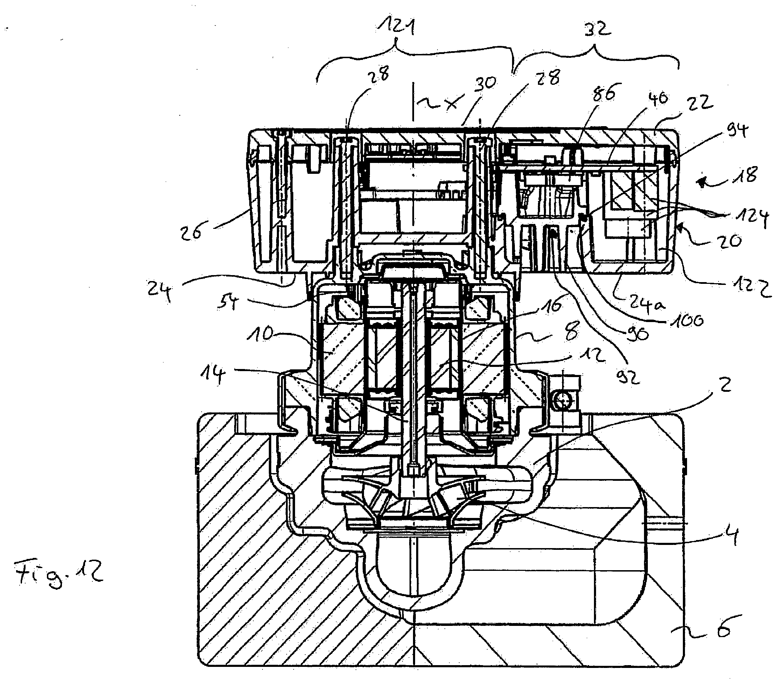

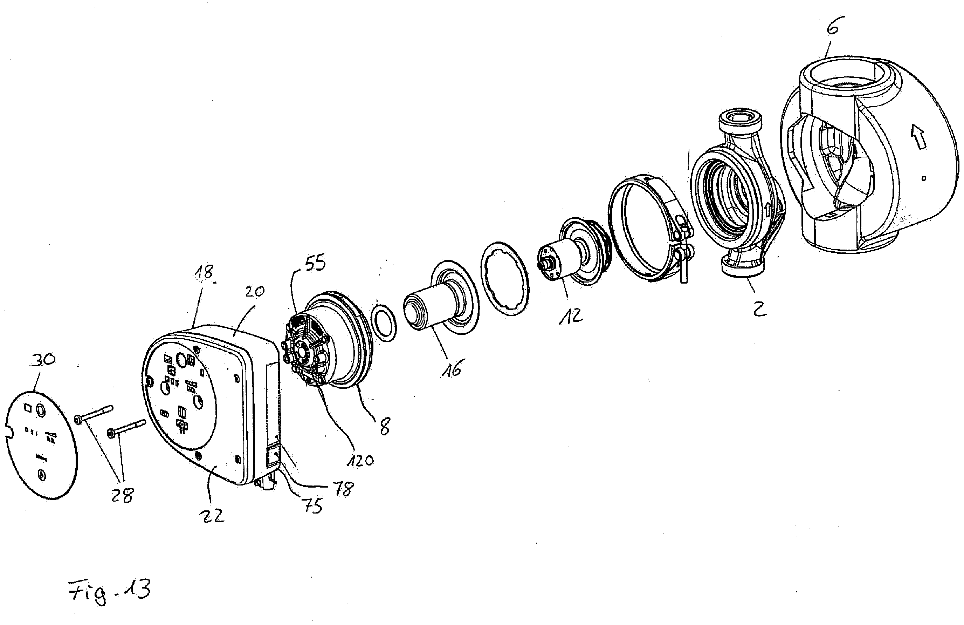

Eine erste bevorzugte Ausführungsform der Erfindung wird anhand der Figuren 1 - 13 beschrieben. Dabei zeigen die Figuren 1 - 3, 12 und 13 das Pumpenaggregat gemäß dieser bevorzugten Ausführungsform in einer Gesamtansicht. Das Pumpenaggregat weist in bekannter Weise ein Pumpengehäuse 2 auf, in welchem ein Laufrad 4 angeordnet ist. Das Pumpenaggregat ist somit als Kreiselpumpenaggregat ausgebildet. In dem hier gezeigten Beispiel ist das Pumpengehäuse 2 von einem Isolationselement 6 umgeben. Das Pumpengehäuse 2 ist mit einem Motor- bzw. Statorgehäuse 8 verbunden, welches sich in axialer Richtung in Richtung der Längs- bzw. Drehachse X an das Pumpengehäuse 2 anschließt. In dem Statorgehäuse 8 ist der elektrische Antriebsmotor angeordnet, welcher insbesondere einen Stator 10 und einen in diesem drehbaren Rotor 12 aufweist. Der Rotor 12 ist vorzugsweise als permanentmagnetischer Rotor ausbildet. Der Rotor 12 ist über die Rotorwelle 14 drehfest mit dem Laufrad 4 verbunden. Der elektrische Antriebsmotor ist als nasslaufender elektrischer Antriebsmotor ausgebildet, d. h. er weist ein Spaltrohr 16 auf.

An das dem Pumpengehäuse 2 abgewandte Axialende (in Richtung der Längsachse X gesehen), des Statorgehäuses 8 ist an das Statorgehäuse 8 ein Klemmenkasten bzw. Elektronikgehäuse 18 angeordnet. Das Elektronikgehäuse 18 ist als Formteil aus Kunststoff ausgebildet, wobei es zweiteilig ausgebildet ist und ein Unterteil 20 und einen auf das Unterteil 20 aufgesetzten Deckel 22 aufweist. Das Unterteil 20 ist im Wesentlichen topfförmig ausgebildet und weist einen Boden 24 auf, welcher dem Statorgehäuse 8 zugewandt ist. Ausgehend von dem Boden 24 erstreckt sich an dessen Außenumfang eine Außenwandung 26 in axialer Richtung in dem Statorgehäuse 8 abgewandter Richtung. Dabei erstreckt sich die Außenwandung 26 im Wesentlichen in Richtung der Längsachse X. An dem offenen, vom Boden 24 beabstandeten Ende der Außenwandung 26 ist der Deckel 22 zum Verschluss des Elektronikgehäuses angesetzt. Der Boden 24 des Elektronikgehäuses ist mit dem Statorgehäuse 8, über zwei Schrauben 28 verschraubt. An der Außenseite des Deckels 22 ist ein Bedienfeld 30 mit Bedien- und Anzeigeelementen ausgebildet.

Das Elektronikgehäuse 18 weist quer zur Längsachse X ist eine größere Ausdehnung auf als die radiale Ausdehnung des Statorgehäuses 8. So weist das Elektronikgehäuse 18 einen radial bzw. seitlich über den Außenumfang des Statorgehäuses 8 auskragenden Abschnitt 32 auf. Auch in den anderen Richtungen steht das Elektronikgehäuse 18 geringfügig allerdings konzentrisch zur Längsachse X über den Außenumfang des Statorgehäuses 8 in radialer Richtung vor. Zu einer Seite hin steht es jedoch in Form des auskragenden Abschnittes 32 weiter vor. Dieser Bereich ist auch in tangentialer Richtung ausgehend von dem Bereich am Axialende des Statorgehäuses 8 verbreitert.

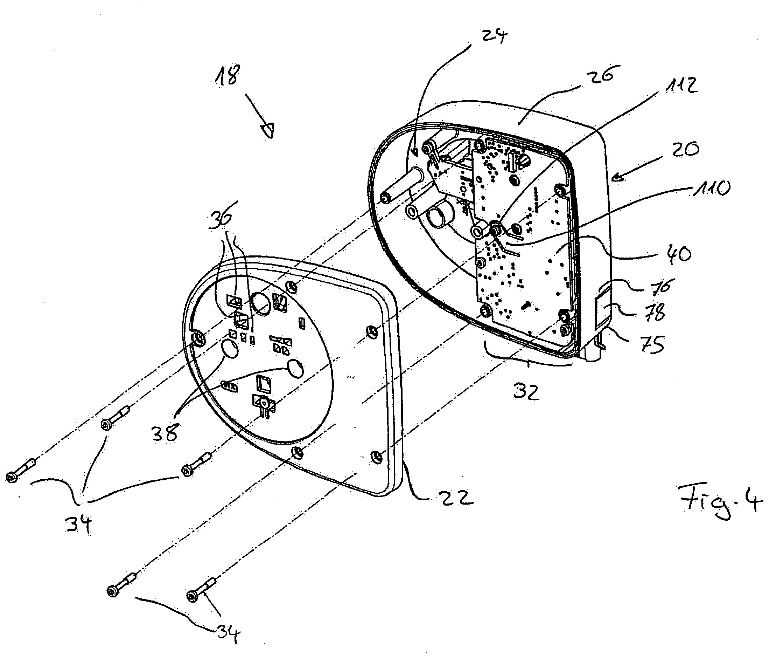

Der Aufbau des Elektronikgehäuses 18 wird nachfolgend näher erläutert. Der Deckel 22 ist, wie in Fig. 4 gezeigt, mittels Schrauben 34 mit dem Unterteil 20 verschraubt. In der Darstellung in Fig. 4 ist die das Bedienfeld 30 bildende Folie vom Deckel abgenommen. Zu erkennen sind lediglich Durchbrechungen 36 in dem Deckel 22, welche den Zugang zu Bedien- und Anzeigeelementen ermöglichen, welche an der Unterseite des Deckels, welche dem Unterteil 2 zugewandt ist, angeordnet sind. Diese Durchbrechungen 36 werden durch die Folie des Bedienfeldes 30 überdeckt und verschlossen. Dabei verdeckt die Folie des Bedienfeldes 30 auch die Löcher 38, durch welche die Schrauben 28 zur Befestigung des Unterteils 20 an dem Statorgehäuse 8 geführt sind.

Im Inneren des Elektronikgehäuses 18, d. h. in dem von der Umfangs- bzw. Außenwandung 26 und dem Boden 24 aufgespannten Innenraum, welcher durch den Deckel 22 verschlossen wird, ist als wesentliches Element eine Leiterplatte 40 angeordnet. An der Leiterplatte 40 sind in bekannter Wiese Leiterbahnen ausgebildet und elektrische und elektronische Bauteile zur Steuerung bzw. Regelung des elektrischen Antriebsmotors in dem Statorgehäuse 8 angebracht. Insbesondere kann auf der Leiterplatte ein Frequenzumrichter ausgebildet sein.

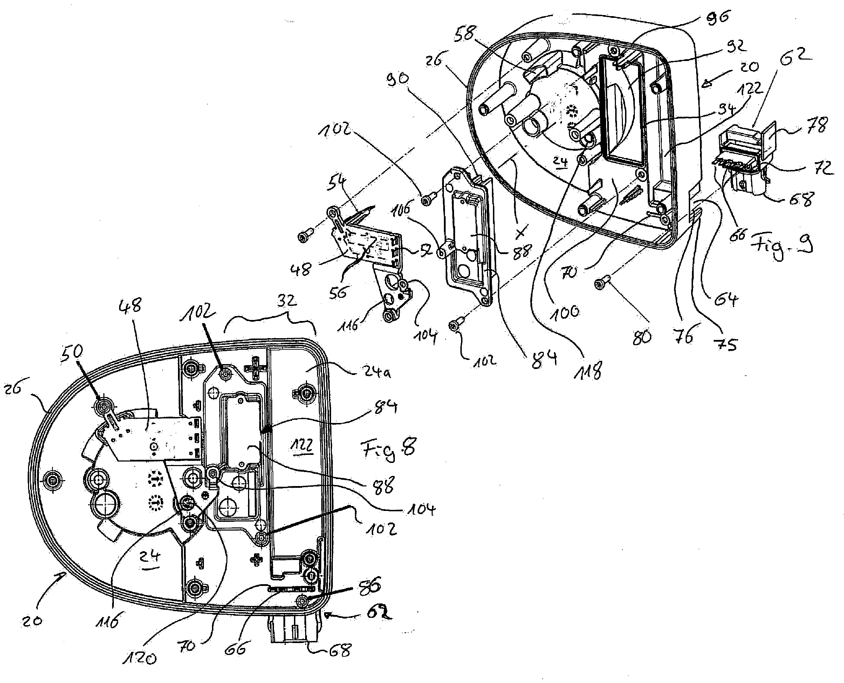

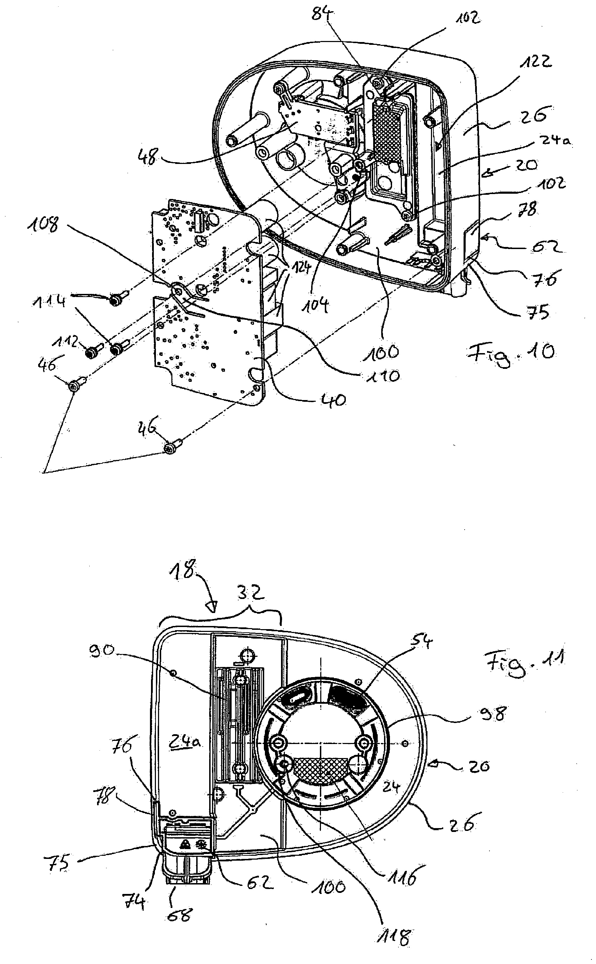

An der Leiterplatte 40 sind zwei Steckkupplungen, eine erste Steckkupplung 42 und eine zweite Steckkupplung 44 ausgebildet. Die erste und zweite Steckkupplung 42 und 44 dienen zur Verbindung mit Anschlusselementen zur Verbindung mit externen Bauteilen, wie es anhand der Figuren 8 und 9 näher erläutert wird. In der Darstellung gemäß Figuren 8 und 9 ist, wie in Fig. 10 gezeigt, die Leiterplatte 40 aus dem Elektronikgehäuse 18 entnommen. Die Leiterplatte 40 ist mit Schrauben 46 in dem Unterteil 20 des Elektronikgehäuses 18 befestigt. Ein erstes Anschlusselement, welches ein Stator-Anschlusselement 48 bildet, dient der elektrischen Verbindung des Stators 10 mit den elektronischen und elektrischen Bauteilen an der Leiterplatte 40. D. h. hier bildet der Stator 10 das externe Bauteil. Das Stator-Anschlusselement 48 ist als separates Bauteil ausgebildet, welches mittels einer Schraube 50 und einer der Schrauben 46, welche die Leiterplatte 40 im Unterteil 20 fixieren, an dem Unterteil 20 des Elektronikgehäuses 8 angeschraubt ist. Das Unterteil 20 ist als reines Kunststoffgehäuse ausgebildet und weist keine fest angeordneten elektrischen Leiter oder Leiterbahnen in seinem Inneren, insbesondere keine in das Kunststoffmaterial eingegossenen Leiterbahnen auf. Solche werden durch Leiterbahnen ersetzt, welche in dem Stator-Anschlusselement 48 ausgebildet sind. Das Stator-Anschlusselement 48 ist als eigenstabiles Formteil aus Kunststoff ausgebildet und weist einen ersten Steckverbinder 52 und einen zweiten Steckverbinder 54 auf. Das Stator-Anschlusselement 48 weist einen flachen Mittelbereich auf, welcher sich parallel zum Boden 24 und zu der Leiterplatte 40 im Inneren des Elektronikgehäuses 18 erstreckt. An entgegengesetzten Enden dieses Mittelbereichs, d. h. in einer Richtung quer zur Längsachse X, sind der erste Steckverbinder 52 und der zweite Steckverbinder 54 voneinander beabstandet angeordnet. Ferner sind der erste Steckverbinder 52 und der zweite Steckverbinder 54 in Richtung der Längsachse X in entgegengesetzte Richtungen gerichtet. D. h. die Steckrichtungen, in welchen die Steckverbinder 52 und 54 kontaktiert werden, sind im Wesentlichen parallel aber entgegengesetzt zueinander gerichtet. In dem hier gezeigten Beispiel sind die Steckverbinder 52 und 54 dreipolig ausgebildet und im Inneren des Stator-Anschlusselementes 48 über Leiterbahnen 56, welche in Fig. 9 gestrichelt dargestellt sind, miteinander verbunden. Die Leiterbahnen 56 sind in das Kunststoffmaterial eingegossen, sodass diese die Leiterbahnen 56 gleichzeitig elektrisch isoliert. Der zweite Steckverbinder 54 erstreckt sich durch eine Öffnung 58 im Boden 24 des Unterteils 20 des Klemmenkastens 18 aus dem Innenraum des Elektronikgehäuses 18 heraus und greift durch eine Öffnung 55 axialseitig in das Innere des Statorgehäuses ein und tritt dort mit Anschlusskontakten bzw. einem Anschlussstecker zur Kontaktierung der Spulen im Stator 10 in Kontakt. Der erste Steckkontakt 52 tritt mit der ersten Steckkupplung 42 an der Leiterplatte 40 elektrisch leitend in Eingriff.

Wie zu erkennen ist, ermöglicht es das Stator-Anschlusselement 48, dass die Leiterplatte 40 nicht oberhalb der Öffnung 58 gelegen sein muss, sondern seitlich in Richtung quer zur Längsachse X zu dieser versetzt in dem Elektronikgehäuse 18 angeordnet werden kann. Dies hat den Vorteil, dass der Bereich, durch welchen sich die Schrauben 28 durch die Führungen 60 in dem Unterteil 20 in dem Elektronikgehäuse 18 erstrecken, frei bleibt, sodass die Befestigung des Elektronikgehäuses 18 an dem Statorgehäuse 8 nicht durch die Leiterplatte 40 in dem Inneren gestört wird. Gegenüber eingegossenen Leitern in dem Elektronikgehäuse hat das Stator-Anschlusselement 48 den Vorteil, dass der Fertigungsvorgang zur Fertigung des Unterteils 20 vereinfacht wird, da keine Leiterbahnen eingegossen werden müssen. Gegenüber einer Kabelverbindung hat das Stator-Anschlusselement 48 den Vorteil, dass es formstabil ist und so definiert in dem Unterteil 20 positioniert wird, sodass ein versehentliches Einklemmen und Beschädigen von Kabeln nicht auftreten kann.

Die zweite Steckkupplung 44 der Leiterplatte 40 ist mit einem zweiten Anschlusselement, welches an Netz-Anschlusselement 62 ausgebildet ist, verbunden. Das Netz-Anschlusselement 62 dient dem Anschluss eines externen Bauteils in Form einer Netz-Anschlussleitung. Während das Stator-Anschlusselement 48 im Inneren des Elektronikgehäuses 18 angeordnet ist und sich lediglich mit seinem zweiten Steckverbinder 54 aus dem Elektronikgehäuse 18 nach außen erstreckt, ist das Netz-Anschlusselement 62 an der Außenseite des Elektronikgehäuses 18 bzw. dessen Unterteils 20 angeordnet. Das Netz-Anschlusselement 62 ist in einer Einbuchtung 64 angeordnet, welche im Boden 24 des Unterteils 20 ausgebildet ist. Die Einbuchtung 64 ist in das Innere des Unterteils 20 gerichtet, d. h. im Bereich der Einbuchtung 64 ist der Boden 24 in axialer Richtung X näher zum Deckel 22 gelegen als der Boden 24 direkt oberhalb des Stators 8. Die Einbuchtung 64 schafft so an der Außenseite des Unterteils 20 einen Aufnahmeraum, in welchem das Netz-Anschlusselement 62 so aufgenommen ist, sodass es nicht über die von der Umfangs- bzw. Außenwandung 26 definierte Gesamt-Außenkontur des Elektronikgehäuses 18 vorsteht. Insbesondere steht das Netz-Anschlusselement 62 nicht in axialer Richtung X über diese Außenkontur vor.

Das Netz-Anschlusselement 62 ist als Formteil aus Kunststoff mit elektrischen Leiterbahnen ausgebildet, welche in das Kunststoffmaterial eingegossen sind. Die elektrischen Leiterbahnen bilden einen ersten Steckverbinder 66, welcher elektrisch leitend mit der zweiten Steckkupplung 44 an der Leiterplatte 40 in Eingriff tritt. In diesem Beispiel sind der erste Steckverbinder66 und die zweite Steckkupplung 44 dreipolig ausgebildet. So sind zwei Netzleiter und ein Erdungsleiter vorhanden. Über die Leiterbahnen im Inneren des Netz-Anschlusselementes 62 ist mit dem ersten Steckverbinder 66 ein zweiter Steckverbinder 68 verbunden, welcher als Steckkupplung zum Anschluss einer hier nicht gezeigten Netz-Anschlussleitung ausgebildet ist. Der erste Steckverbinder 66 erstreckt sich durch eine Öffnung 70 im Boden 24 des Unterteils 20 hindurch in das Innere des Unterteils 20 und damit des Elektronikgehäuses 18 hinein, um dort mit der zweiten Steckkupplung 44 der Leiterplatte 40 in Eingriff zu treten. Den ersten Steckverbinder 66 umgebend ist an dem Netz-Anschlusselement 62 eine Dichtung 72 angeordnet, welche dichtend mit der Außenseite des Bodens 24 zur Anlage kommt und so die Öffnung 70 nach außen abdichtet. Alternativ könnte diese Dichtung 72 auch am Boden 24 des Unterteils 20 ausgebildet sein.

Der zweite Steckverbinder 68 ist gegenüber dem ersten Steckkontakt 66 um 90° abgewinkelt ausgebildet, sodass der zweite Steckverbinder 68 sich zu der Umfangswandung 26 hin erstreckt bzw. durch eine Öffnung bzw. Ausnehmung 74 seitlich nach außen erstreckt. D. h. die Steckrichtungen des ersten Steckverbinders 66 und des zweiten Steckverbinders 68 sind in einem Winkel von 90° zueinander gerichtet. Die Ausnehmung 74 ist in einer Wand 75, welche die Einbuchtung 64 umgibt, gelegen. Diese Wand 75 stellt eine axiale Verlängerung der Außenwandung 26 dar und bildet somit einen Teil der Außenwandung 26, auch wenn sie nicht den Innenraum des Unterteils 20 bzw. des Elektronikgehäuses 18 umgibt. In dieser Wand 75 ist eine zweite Ausnehmung 76 an einer angrenzenden Seitenfläche der Einbuchtung 64 ausgebildet. Die Einbuchtung 64 ist an einer Ecke des Unterteils 20 gelegen, sodass die Ausnehmungen 74 und 76 an zwei sich im Wesentlichen im Winkel von 90° zu einander erstreckenden Wänden bzw. Wandabschnitten gelegen sind. Wenn das Netz-Anschlusselement 62 in der Einbuchtung 64 gelegen ist, liegt eine Außenfläche 78 in der Ausnehmung 76 und verschließt diese so, dass sich die Außenfläche 78 des Netz-Anschlusselementes 62 harmonisch bzw. bündig in die Wand 75 bzw. Außenseite der Umfangswandung 26 einfügt. Das Netz-Anschlusselement 62 ist vorzugsweise einstückig aus Kunststoff ausgebildet. Dabei weist der Kunststoff bevorzugt eine Farbe auf, welche sich von der Farbe der umgebenden Außenwandung 26 und damit des gesamten Unterteils 20 unterscheidet. Dies kann von Vorteil sein, um auf der Außenfläche 78 eine von außen sichtbare Beschriftung, wie beispielsweise einen QR-Code anzubringen, welcher auf der Farbe der Außenwandung 26 schlecht lesbar wäre. So kann auf ein zusätzlich anzubringendes Schriftfeld verzichtet werden. Dieses wird vielmehr durch die Außenfläche 78 bereitgestellt.

In der Einbuchtung 64 wird das Netz-Anschlusselement 62 durch eine Schraube 80, weiche sich von innen her durch den Boden 24 des Unterteils 30 erstreckt, fixiert. D. h. das Netz-Anschlusselement 62 kann von der Außenseite her nicht gelöst werden. Somit ist sichergestellt, dass in diesem Bereich das Elektronikgehäuse 18 sicher verschlossen bleibt. Dadurch, dass das Netz-Anschlusselement 62 in der Einbuchtung 64, welche in dem auskragenden Abschnitt 32 an einer Ecke gelegen ist, angeordnet ist, ist der sich zur Seite hin erstreckende zweite Steckverbinder 68 für den Anschluss der Netz-Anschlussleitung 62 gut zugänglich. Dabei ist der zweite Steckverbinder 68 parallel zu einem Saugstutzen 82 gerichtet, welcher sich bei bevorzugter Einbaulage des Pumpenaggregates nach unten erstreckt.

Die Verwendung des Netz-Anschlusselementes hat den Vorteil, dass eine Netz-Anschlussleitung nicht direkt mit der Leiterplatte 40 bzw. den dort angeordneten elektrischen Leitern verbunden werden muss. So ist es zum Anschluss der Netz-Anschlussleitung nicht erforderlich, das Elektronikgehäuse 18 zu öffnen, wodurch eine versehentliche Beschädigung elektrischer bzw. elektronischer Bauteile im Inneren beim Anschluss einer Netz-Anschlussleitung verhindert werden kann. Die Anordnung des Netz-Anschlusselementes 62 an der Außenseite hat darüber hinaus den Vorteil, dass die Öffnung 70 im Boden 24 gut von der Außenseite her abgedichtet werden kann, sodass ein Eindringen von Feuchtigkeit in diesem Bereich verhindert wird. Ferner könnte das Netz-Anschlusselement 62 eine Adapterfunktion übernehmen, bei welcher unterschiedliche zweite Steckverbinder 68 vorgesehen werden, um unterschiedlich geformte Gegenstücke von Netz-Anschlussleitungen hier anschließen zu können. So lässt sich eine Anpassung des Elektronikgehäuses 18 an verschiedene Anschlussleitungen realisieren, ohne die wesentlichen Bauteile wie die Leiterplatte 40 ändern zu müssen. Darüber hinaus kann auch im Bereich des Netzanschlusses auf in dem Unterteil 20 und damit dem Elektronikgehäuse 18 angeordnete Leiterbahnen verzichtet werden.

In dem Unterteil 20 ist ferner ein Wärmeverteiler 84 angeordnet, welcher der Kühlung von Wärme erzeugenden elektronischen Bauelementen an der Leiterplatte 40 dient. Ein solches elektronisches Bauelement 86 kann beispielsweise der Leistungsschalter eines Frequenzumrichters sein. Bei der hier gewählten Anordnung ist das zu kühlende elektronische Bauelement 86 an der dem Boden 24 zugewandten Seite der Leiterplatte 40 gelegen. Das zu kühlende Bauelement 86 ist an der Anlagefläche 88 an dem Wärmeverteiler 84 in wärmeleitende Anlage. Die Anlagefläche 88 erstreckt sich im Wesentlichen parallel zum Boden 24 und zu der Leiterplatte 40, d. h. normal zu der Längs- bzw. Drehachse X. Der Wärmeverteiler 84 ist als Gussbauteil aus Metall, beispielsweise Aluminium ausgebildet und weist an seiner der Anlagefläche 88 abgewandten Axialseite eine Rippenstruktur 90 auf. Der Wärmeverteiler 84 ist im Inneren des Elektronikgehäuses 18 bzw. dessen Unterteils 20 so angeordnet, dass er sich durch eine Ausnehmung bzw. Öffnung 92 im Boden 24 des Elektronikgehäuses 18 derart nach außen erstreckt, dass die Rippenstruktur 90 an der Außenseite des Unterteils 20 gelegen ist, während die Anlagefläche 88 im Inneren gelegen ist. Am Umfangsbereich der Öffnung 92 ist eine Dichtung 94 angeordnet, welche dichtend mit einer korrespondierenden Anlagefläche an dem Wärmeverteiler 84 zur Anlage kommt, sodass der Wärmeverteiler 84 die Öffnung 92 dicht verschließt. Die Dichtung 94 ist zweckmäßigerweise im Zweikomponentenspritzguss direkt an das Unterteil 20 angegossen. So kann die Dichtung 94 gleichzeitig mit weiteren Dichtungen 96 und 98 gegossen werden, welche zur Abdichtung des Deckels 22 sowie des Bodens 24 gegenüber dem Axialende des Statorgehäuses 8 dienen.

In dem Bereich der Öffnung 92 weist der Boden 24 es Unterteils 20 eine Stufe 100 auf. Die Stufe 100 springt in das Innere des Elektronikgehäuses 18 vor. So bildet die Stufe 100 eine nach innen gerichtete Einbuchtung und bewirkt, dass die Öffnung 92 in axialer Richtung näher zu der Leiterplatte 40 gelegen ist als der übrige Bereich des Bodens 24. So kann die Öffnung 92 und damit die Anlagefläche 88 des in die Öffnung eingesetzten Wärmeverteilers 64 in die Nähe der Leiterplatte 40 gebracht werden, um dort mit dem zu kühlenden elektronischen Bauelement 86 direkt in Kontakt gebracht zu werden. Gleichzeitig wird außenseitig der Öffnung 92, d. h. an der dem Statorgehäuse 8 zugewandt Außen- bzw. Unterseite des Unterteils 20 im Bereich der Stufe 100 eine Einbuchtung bzw. ein Aufnahmeraum geschaffen, in welchem der äußere Teil des Wärmeverteilers, nämlich die Rippenstruktur 90 Platz findet. So wird erreicht, dass die Rippenstruktur 90 zwar außerhalb des Elektronikgehäuses 18 liegt jedoch innerhalb der von der Außenwandung 26 definierten Außenkontur des Elektronikgehäuses. Insbesondere steht die Rippenstruktur 90 in axialer Richtung nicht über den an das Statorgehäuse 8 angrenzenden Boden 24 des Elektronikgehäuses 18 vor. Die Rippenstruktur 90 liegt dabei ferner seitlich bzw. radialseitig des Außenumfanges des Statorgehäuses 8 in dem auskragenden Abschnitt 32, sodass sie an der Unterseite des Elektronikgehäuses 18, welche dem Statorgehäuse 8 zugewandt ist, frei von Luft überströmt werden kann. Die Öffnung 92, durch welche sich der Wärmeverteiler 84 mit seiner Rippenstruktur 90 nach außen erstreckt, liegt somit in einem Bereich, welcher dem Statorgehäuse nicht zugewandt ist. Zwar ist der Boden 24 grundsätzlich dem Axialende des Statorgehäuses 8 zugewandt, jedoch ist der Boden in dem auskragenden Abschnitt 32 dem Statorgehäuse 8 nicht zugewandt, sondern einem Bereich radialseitig des Statorgehäuses, d. h. außerhalb des Statorgehäuses, zugewandt. So liegt die Öffnung 92 mit dem Wärmeverteiler 84 in einem dem Statorgehäuse 8 abgewandten Bereich des Elektronikgehäuses 18. Die Kühlung der Rippenstruktur 90 über die Umgebungsluft wird ferner dadurch begünstigt, dass die Rippenstruktur 90 nicht durch Gehäuseteile überdeckt ist. Gleichzeitig wird die Oberseite des Elektronikgehäuses 18, d. h. des Deckels 22, an welcher das Bedienfeld 30 gelegen ist, frei von wärmeabführenden Bauelementen gehalten. So ist der Wärmeverteiler 84 von der Bedienseite her im Wesentlichen nicht sichtbar, sodass er den optischen Eindruck des Elektronikgehäuses 18 nicht stört.

Der Wärmeverteiler 84 ist im Unterteil 20 über zwei Schrauben 102 befestigt. Ferner ist der Wärmeverteiler 88 mit einem Erdungsanschluss einer Erdungsverbindung in dem Stator-Anschlusselement 48 verbunden. Die Erdungsverbindung in dem Stator-Anschlusselement 48 ist ebenfalls als eine eingegossene Leiterbahn 56 ausgebildet, welche an einem ösen- bzw. ringförmigen Erdungsanschluss 104 endet. Der ringförmige Erdungsanschluss 104 kommt bei Montage des Stator-Anschlusselementes 48 über einem Gewindeloch 106 in den Wärmeverteiler 84 zu liegen. Dem Gewindeloch 106 abgewandt, kommt über dem ringförmigen Erdungsanschluss 104 ein Erdungskontakt 108 der Leiterplatte 40 zu liegen. Der Erdungskontakt ist durch eine ein Loch umgebende Leiterbahn gebildet und an einem zungenförmigen Abschnitt 110 gelegen. Der zungenförmige Abschnitt 110 ist in der Leiterplatte durch Schnitte ausgebildet. Durch das Loch des Erdungskontaktes 108 an dem zungenförmigen Abschnitt 110 und durch den Erdungsanschluss 104 erstreckt sich in das Gewindeloch 106 hinein eine Schraube 112. So wird eine Erdungsverbindung zwischen einem an der Leiterplatte 40 ausgebildeten Erdungsleiter gleichzeitig mit dem Erdungsanschluss 104 des Stator-Anschlusselementes 48 und dem Wärmeverteiler 84 hergestellt. Der an der Leiterplatte 40 ausgebildete Erdungsleiter ist über die Steckkupplung 44 mit einem entsprechenden Erdungskontakt des Steckverbinders 66 des Netz-Anschlusselementes 62 und über dieses mit dem Erdungsleiter einer Netz-Anschlussleitung verbunden.

Die Anordnung des Erdungskontaktes 108 auf dem zungenförmigen Abschnitt 110 hat den Vorteil, dass damit der Erdungskontakt 108 gemeinsam mit dem zungenförmigen Abschnitt 110 gegenüber den übrigen Teilen der Leiterplatte 40 bewegbar ist. So wird verhindert, dass durch die Verbindung des Erdungskontaktes 108 mit dem Wärmeverteiler 84 und dem Stator-Anschlusselement 48 Spannungen in die Leiterplatte 40 eingebracht werden, welche beispielsweise zum Reißen von Leiterbahnen an der Leiterplatte 40 führen könnten.

Ferner ist bei dieser Ausgestaltung der Kontakt zwischen dem Wärmeverteiler 84 und dem Erdungsanschluss 104 an dem Stator-Anschlusselement 48 so dimensioniert, dass neben einer elektrisch leitenden Verbindung auch eine Wärme leitende Verbindung geschaffen wird. Dazu kann die Anlagefläche zwischen Wärmeverteiler 84 und Erdungsanschluss 104 größer ausgebildet sein als für den elektrischen Kontakt erforderlich. Dadurch wird erreicht, dass der Wärmeverteiler den Erdungsanschluss 104 und die sich daran anschließende Leiterbahn im Inneren des Stator-Anschlusselementes 48 erwärmen kann. Dies hat den Vorteil, dass die Leiterbahn und der Erdungsanschluss 104 im inneren des Elektronikgehäuses 18 sich nicht über einen Kontakt mit dem Statorgehäuse 8, wie er nachfolgen beschrieben wird, abkühlen können, was zu einer Kondensation von Feuchtigkeit im Elektronikgehäuse 18 führen könnte. Eine solche Abkühlung wäre beispielsweise zu befürchten, wenn das Pumpenaggregat als Kaltwasserpumpe eingesetzt wird, bei welcher es in einer Abkühlung des Statorgehäuses 8 kommt.

Über zwei Schrauben 114 ist ferner das elektronische Bauelement 86 an der Anlagefläche 88 des Wärmeverteilers 84 fixiert.

Das Stator-Anschlusselement 48 weist an seiner Erdungsverbindung darüber hinaus einen weiteren Erdungsanschluss 116 auf. Dieser kommt über einer Öffnung 118 im Boden 24 des Unterteils 20 zu liegen. Durch die Öffnung 118 hindurch kann sich ein Stift 120, welcher am Axialende des Statorgehäuses 8 angeordnet ist, in das Innere des Elektronikgehäuses 18 hinein erstrecken und in den Erdungsanschluss 116 eingreifen. Der Stift 120 ist an der Axialseite des Statorgehäuses 8 mit diesem elektrisch leitend verbunden und steht in axialer Richtung X vor. In dem Erdungsanschluss 116 sind Federbleche bzw. Federzungen ausgebildet, welche schneidend und elektrisch leitend mit dem Außenumfang des Stiftes 120 in Eingriff treten. So wird eine Erdungsverbindung zwischen dem metallischen Statorgehäuse 8 und der Erdungsverbindung in dem Stator-Anschlusselement 48 hergestellt. Über das Stator-Anschlusselement 48 und dessen zweiten Erdungsanschluss 104 erfolgt die Erdung dann über die Erdungsleitung an der Leiterplatte 40 und wie beschrieben das Netz-Anschlusselement 62.

Die beschriebene Stufe 100 im Boden 24 des Unterteils 20 ist in dem auskragenden Abschnitt 32 angrenzend zu dem Mittelbereich 121 des Unterteils 20, welches an das Axialende des Statorgehäuses 8 angesetzt ist, gelegen und streifenförmig in tangentialer Richtung ausgebildet. D. h. an dem radial äußeren Abschnitt ist ein Bereich 24a des Bodens 24 ausgebildet, welcher über der Stufe 100 wieder in axialer Richtung zu dem Statorgehäuse 8 hin vorspringt und auf demselben axialen Niveau wie der übrige Bereich des Bodens 24 außerhalb des Stufe 10 gelegen ist. So wird an die Stufe 100 angrenzend im Innenraum des Unterteils 20 ein Aufnahmeraum 122 geschaffen, welcher eine größere axiale Bauhöhe hat. D. h. im Bereich des Aufnahmeraums 122 ist die axiale Höhe zwischen der Leiterplatte 40 und dem Boden 24, 24a größer als zwischen der Leiterplatte 40 und der Stufe 100 im Inneren des Elektronikgehäuses 18. So können in den Aufnahmeraum 122 diejenigen elektronischen Bauteile 124 hineinragen, welche eine größere axiale Bauhöhe aufweisen. Durch die Ausbildung der Stufe 100 im Boden 24 des Elektronikgehäuses 18 mit dem seitlich der Stufe gelegenen Aufnahmeraum 122 kann somit zum einen erreicht werden, dass das wärmeabgebende zu kühlende elektronische Bauelement 86 in axialer Richtung in der Nähe der Öffnung 92, durch welche sich der Wärmeverteiler 84 nach außen erstreckt, angeordnet werden kann, gleichzeitig seitlich aber über der Leiterplatte 40 in dem Aufnahmeraum 22 ein größerer axialer Freiraum zur Aufnahme höherer elektronischer Bauelemente 124 gegeben ist. Dies ermöglicht es, alle elektronischen Bauelemente auf einer planen Leiterplatte 40 anzuordnen und darüber hinaus ein flaches, in seiner Gesamtkontur im Wesentlichen scheibenförmiges Elektronikgehäuse 18 auszubilden, über welches keine Bauteile, wie ein Wärmeverteiler 84 in axialer Richtung vorstehen. Die Einbuchtung 64, in welcher das Netz-Anschlusselement 62 gelegen ist, ist wie der Aufnahmeraum 122 an der der Längsachse X abgewandten Seite der Stufe 100 gelegen. Die Einbuchtung 64 ist dabei mit dem durch die Stufe 100 an der Außenseite des Bodens 24 gebildeten Freiraum, in welchem die Rippenstruktur 90 gelegen ist, verbunden.

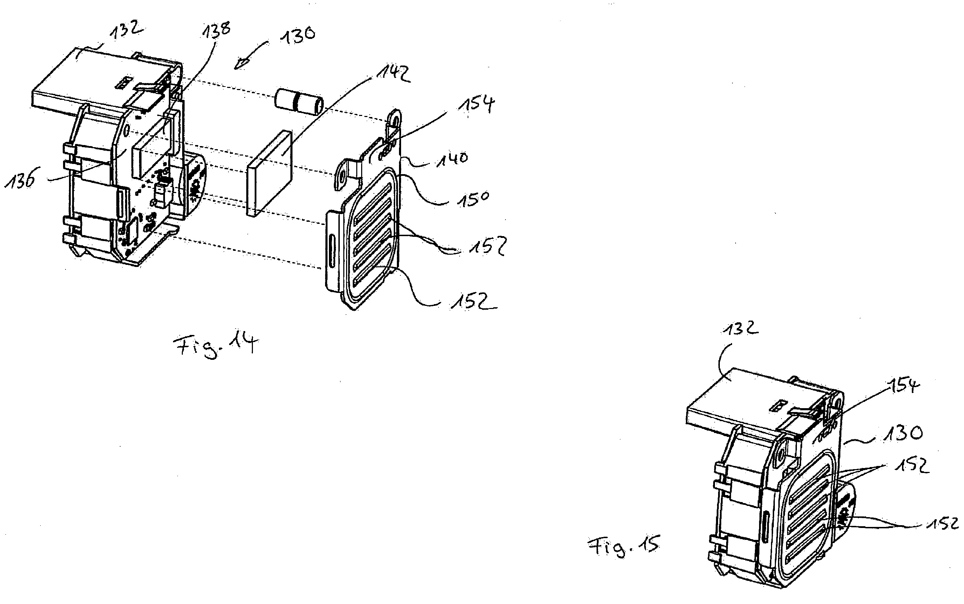

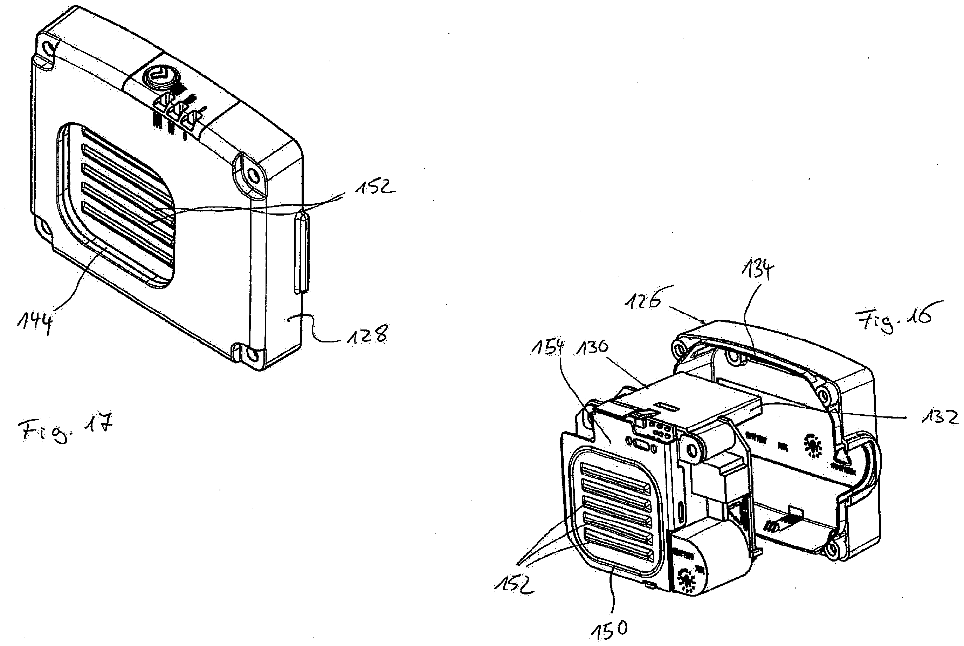

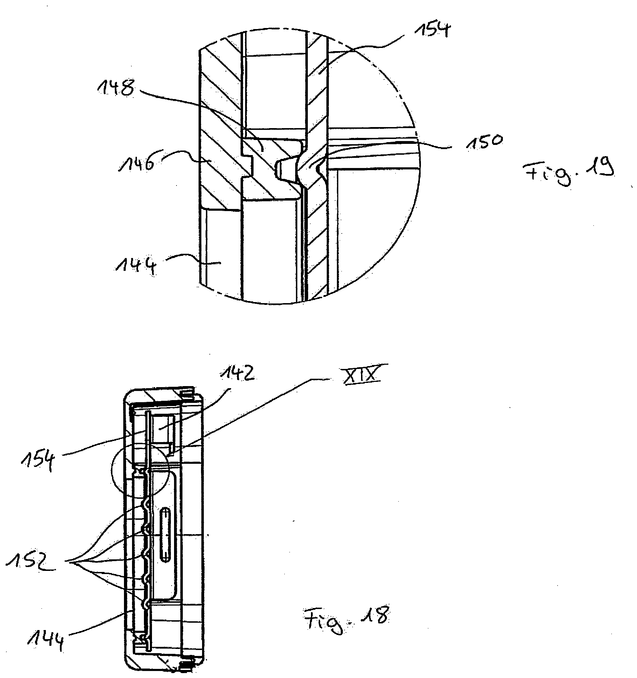

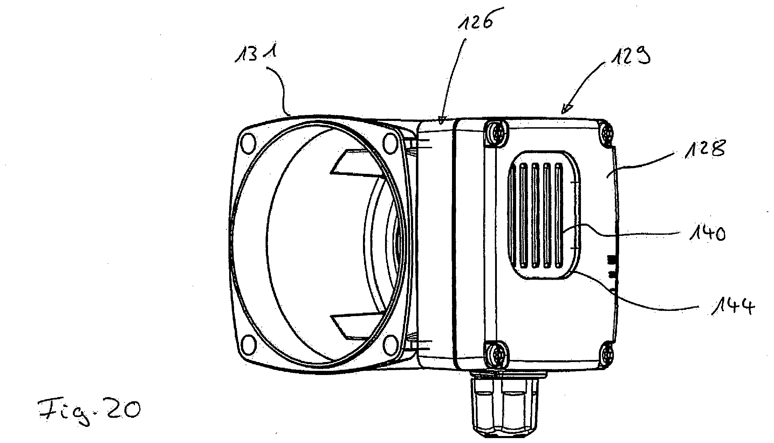

Anhand der Figuren 14 - 20 wird eine weitere mögliche erfindungsgemäße Anordnung eines Wärmeverteilers in einem Elektronikgehäuse eines Pumpenaggregates beschrieben. Das hier gezeigte Elektronikgehäuse besteht aus einem Unterteil 126 und einem Deckel 128, welche miteinander verschraubt werden. Das so gebildete Elektronikgehäuse 129 ist zum Ansatz an ein Statorgehäuse 131 ausgebildet, wobei das Elektronikgehäuse 129 umfangsseitig, d. h. radialseitig an das Statorgehäuse 131 angesetzt ist. Entsprechend könnte das Elektronikgehäuse jedoch auch wie vorangehend beschrieben axialseitig an ein Statorgehäuse angesetzt werden. Mit dem Statorgehäuse 131 ist das Unterteil 126 des gezeigten Elektronikgehäuses 129 verbunden. Im Inneren des aus dem Unterteil 126 und dem Deckel 128 gebildeten Elektronikgehäuses 129 ist eine Elektronikeinheit 130 angeordnet, welche elektronische Bauelemente zur Steuerung bzw. Regelung eines elektrischen Antriebsmotors eines Pumpenaggregates, beispielsweise einen Frequenzumrichter aufweist. Die Elektronikeinheit 130 weist einen Anschlussstecker 132 auf, welcher sich durch eine Öffnung 134 in dem Boden des Unterteils 26 aus dem Elektronikgehäuse nach außen erstreckt und zur Kontaktierung mit einem entsprechenden Gegen-Anschlussstecker im Statorgehäuse vorgesehen ist.

Die Elektronikeinheit weist eine Leiterplatte 136 auf, an welcher zumindest ein wärmeerzeugendes elektronisches Bauteil 138, beispielsweise der Leistungsschalter eines Frequenzumrichters angeordnet ist. Ferner ist ein Wärmeverteiler 140 im Inneren des Elektronikgehäuses angeordnet. Der Wärmeverteiler 140 ist als Formteil aus Blech ausgebildet und über ein Wärmeleitkissen 142 in wärmeleitender Verbindung mit dem wärmeerzeugenden elektronischen Bauteil 138. Es ist zu verstehen, dass anstelle des Wärmeleitkissens 142 auch eine andere wärmeleitende Verbindung zwischen dem Wärmeverteiler 140 und dem elektronischen Bauteil 138 geschaffen werden kann, beispielsweise über eine Wärmeleitpaste oder auch durch direkten Kontakt.

Der Wärmeverteiler 140 ist im Inneren des Elektronikgehäuses 129 gelegen, d. h. unterhalb des Deckels 128. Der Deckel 128 weist eine Öffnung 144 auf. Der Wärmeverteiler 140 ist im Inneren des Elektronikgehäuses 129 unter der Öffnung 144 gelegen, sodass er die Öffnung 144 verschließt. Dazu ist zwischen dem Wärmeverteiler 140 und der die Öffnung 144 umgebenden Wandung 146 eine Dichtung 148 angeordnet, an welcher der Wärmeverteiler 140 mit einem Vorsprung 150 dichtend anliegt. So verschließt der Wärmeverteiler 140 die Öffnung 144 dicht nach außen. Die Öffnung 144 ist in dem dem Statorgehäuse 131 abgewandten Deckel 128 gelegen, da das Unterteil 126 zur Verbindung mit dem Statorgehäuse 131 vorgesehen ist. So ist auch bei dieser Anordnung des Wärmeverteilers 140 in der Öffnung 144 in einem dem Statorgehäuse abgewandten Bereich des Elektronikgehäuses 129 angeordnet.

In dem in der Öffnung 144 gelegenen Teil des Wärmeverteilers 140 sind Wellen 152 ausgebildet. Der Vorsprung 150 und die Wellen 152 sind durch Prägen des Blechbauteils, aus welchem der Wärmeverteiler 140 gefertigt ist, ausgebildet und nach außen zu der Öffnung 144 hin vorspringend gerichtet. Die Wellen 152 vergrößern die Oberfläche des Wärmeverteilers 140 im Bereich der Öffnung 144 und verbessern so in diesem Bereich die Wärmabfuhr. Der Wärmeverteiler 140 ist im Bereich der Öffnung 144 außen nicht von weiteren Bauteilen überdeckt und steht in axialer Richtung nicht über die Außen- bzw. Vorderseite des Deckels 128, d. h. über die äußere Umfangskante der Öffnung 144 nach außen vor.

Das elektronische Bauteil 138 liegt an dem Wärmeverteiler 140 in einem Bereich 154 an, welcher plan ausgebildet ist und außerhalb der Öffnung 144, d. h. seitlich der Öffnung 144 in Richtung der Oberfläche des Deckels 128 gelegen ist. Dies hat den Vorteil, dass der Bereich 154 ohne Wellen 152 plan ausgebildet sein kann, sodass ein guter Wärmeübergang von dem elektronischen Bauteil 138 über das Wärmeleitkissen 142 auf den Bereich 154 des Wärmeverteilers 140 erreicht werden kann. Gleichzeitig kann der von Luft überströmte in der Öffnung 144 gelegene Teil des Wärmeverteilers 140 durch die Wellen 152 strukturiert ausgebildet sein, um eine größere Oberfläche zur besseren Kühlung zu erreichen.

### Bezugszeichenliste

- 2: Pumpengehäuse
- 4: Laufrad
- 6: Isolationselement
- 8: Statorgehäuse
- 10: Stator
- 12: Rotor
- 14: Rotorwelle
- 16: Spaltrohr
- 18: Elektronikgehäuse
- 20: Unterteil
- 22: Deckel
- 24, 24a: Boden
- 26: Außenwandung
- 28: Schrauben
- 30: Bedienfeld
- 32: auskragender Abschnitt
- 34: Schrauben
- 36: Durchbrechungen
- 38: Löc her
- 40: Leiterplatte
- 42: erste Steckkupplung
- 44: zweite Steckkupplung
- 46: Schrauben
- 48: Stator-Anschlusselement
- 50: Schraube
- 52: erster Steckverbinder
- 54: zweiter Steckverbinder
- 55: Öffnung
- 56: Leiterbahnen
- 58: Öffnung
- 60: Führungen
- 62: Netz-Anschlusselement
- 64: Einbuchtung
- 66: erster Steckverbinder
- 68: zweiter Steckverbinder
- 70: Öffnung
- 72: Dichtung
- 74, 76: Ausnehmungen
- 75: Wand
- 78: Außenfläche
- 80: Schraube
- 82: Saugstutzen.
- 84: Wärmeverteiler
- 86: elektronisches Bauelement
- 88: Anlagefläche
- 90: Rippenstruktur
- 92: Öffnung
- 94: Dichtung
- 96, 98: Dichtung
- 100: Stufe
- 102: Schrauben
- 104: Erdungsanschluss
- 106: Gewindeloch
- 108: Erdungskontakt
- 110: Abschnitt
- 112: Schraube
- 114: Schrauben
- 116: Erdungsanschluss
- 118: Öffnung
- 120: Stift
- 121: Mittelbereich
- 122: Aufnahmeraum
- 124: elektronische Bauteile
- 126: Unterteil
- 128: Deckel
- 129: Elektronikgehäuse
- 130: Elektronikeinheit
- 131: Statorgehäuse
- 132: Anschlussstecker
- 134: Öffnung
- 136: Leiterplatte
- 138: elektronisches Bauteil
- 140: Wärmeverteiler
- 142: Wärmeleitkissen
- 144: Öffnung
- 146: Wandung
- 148: Dichtung
- 150: Vorsprung
- 152: Wellen
- 154: Bereich

- X: Längsachse

## Patentansprüche

1. Pumpenaggregat mit einem in einem Statorgehäuse (8) angeordneten elektrischen Antriebsmotor und einem an der Außenseite des Statorgehäuses (8) angeordneten Elektronikgehäuse (18), wobei
das Elektronikgehäuse (18) in einem dem Statorgehäuse (8) nicht zugewandten Abschnitt einer Außenwandung (24; 128) zumindest eine Öffnung (92; 144) aufweist, an welcher ein im Inneren des Elektronikgehäuses (18) angeordneter Wärmeverteiler (84; 140) gelegen ist, welcher die Öffnung (92; 144)
verschließt dadurch gekennezeichnet, dass der Wärmeverteiler (84, 140) im Bereich der Öffnung (92; 144) zur Außenseite hin freiliegt oder zu maximal 50% seiner Grundfläche überdeckt ist.

2. Pumpenaggregat nach Anspruch 1, **dadurch gekennzeichnet, dass** das Elektronikgehäuse (18) an einer Radialseite oder Axialseite des Statorgehäuses (8) gelegen ist.

3. Pumpenaggregat nach Anspruch 1 oder 2, **dadurch gekennzeichnet, dass** das Elektronikgehäuse (18) axialseitig an das Statorgehäuse (8) angesetzt ist und zumindest einen in radialer Richtung über den Außenumfang des Statorgehäuses (8) auskragenden Abschnitt (32) aufweist und dass die Öffnung (92) in einer Außenwandung (24) des Elektronikgehäuses (18) ausgebildet ist, welche an einer dem Statorgehäuse (8) zugewandten Axialseite (24) des Elektronikgehäuses (18) im Bereich des auskragenden Abschnittes (32) gelegen ist.

4. Pumpenaggregat nach einem der vorangehenden Ansprüche, **dadurch gekennzeichnet, dass** zwischen dem Wärmeverteiler (84; 142) und der die Öffnung (92; 144) umgebenden Außenwandung eine Dichtung (94; 148) angeordnet ist.

5. Pumpenaggregat nach einem der vorangehenden Ansprüche, **dadurch gekennzeichnet, dass** der Wärmeverteiler (84; 142) vollständig im Inneren des Elektronikgehäuses (18) gelegen ist oder sich durch die Öffnung (92; 144) hindurch aus dem Inneren des Elektronikgehäuses (18) nach außen erstreckt.

6. Pumpenaggregat nach einem der vorangehenden Ansprüche, **dadurch gekennzeichnet, dass** der Wärmeverteiler als Gussbauteil (84) oder als Formteil (140) aus Blech ausgebildet ist.

7. Pumpenaggregat nach einem der vorangehenden Ansprüche, **dadurch gekennzeichnet, dass** ein Bereich (154) des Wärmeverteilers (140) im Inneren des Elektronikgehäuses wärmeleitend mit zumindest einem elektronischen Bauteil (138) verbunden ist, wobei dieser Bereich (154) zumindest teilweise außerhalb der Außenkontur der Öffnung (144) gelegen ist.

8. Pumpenaggregat nach einem der vorangehenden Ansprüche, **dadurch gekennzeichnet, dass** der Wärmeverteiler (84) an der Außenseite des Elektronikgehäuses (18) beabstandet von dem Statorgehäuse (18) ist.

9. Pumpenaggregat nach einem der vorangehenden Ansprüche, **dadurch gekennzeichnet, dass** die Außenwandung (24) des Elektronikgehäuses (18), in welcher die Öffnung (92) ausgebildet ist, eine ins Innere des Elektronikgehäuse (18) ragende Stufe (100) aufweist, in welcher die Öffnung (92) gelegen ist.

10. Pumpenaggregat nach Anspruch 9, **dadurch gekennzeichnet, dass** die Stufe (100) an der Außenseite des Elektronikgehäuses (18) eine erste Einbuchtung bildet, in der der Wärmeverteiler (84) gelegen ist.

11. Pumpenaggregat nach einem der vorangehenden Ansprüche, **dadurch gekennzeichnet, dass** der Wärmeverteiler (84; 140) vollständig innerhalb der axialen Erstreckung einer Umfangswandung (26) des Elektronikgehäuses (18) gelegen ist.

12. Pumpenaggregat nach einem der vorangehenden Ansprüche, **dadurch gekennzeichnet, dass** der Wärmeverteiler (84; 144) im Inneren des Elektronikgehäuses (18) an zumindest einem elektronischen Bauteil (86; 138), welches an einer Leiterplatte (40; 136) angeordnet ist, wärmeleitend anliegt, wobei die Leiterplatte (40; 136) sich vorzugsweise im Wesentlichen parallel zu der Außenwandung (24; 128) des Elektronikgehäuses (18), in welcher die Öffnung (92; 144) ausgebildet ist, erstreckt.

13. Pumpenaggregat nach einem der Ansprüche 9 bis 12, **dadurch gekennzeichnet, dass** seitlich der ins Innere des Elektronikgehäuses (18) ragenden Stufe (100) ein Aufnahmeraum (122) vorhanden ist, in welchem die Außenwandung (24a) des Elektronikgehäuses (18) in axialer Richtung (X) weiter von einer im Elektronikgehäuse (18) gelegenen Leiterplatte (40) beabstandet ist als im Bereich der Stufe (100) und in welchem zumindest ein elektronisches Bauteil (124) mit größerer Bauhöhe angeordnet ist.

14. Pumpenaggregat nach Anspruch 13, **dadurch gekennzeichnet, dass** der Aufnahmeraum (122) zwischen der Stufe (100) und einer Umfangswandung (26) des Elektronikgehäuses (18), vorzugsweise an einer der Drehachse (X) des Antriebsmotors abgewandten Seite der Stufe (100) gelegen ist.

15. Pumpenaggregat nach einem der vorangehenden Ansprüche, **gekennzeichnet durch** ein Anschlusselement (62), welches einen ersten Steckverbinder (66) aufweist, welcher mit einem korrespondierenden Steckkontakt an einer im Inneren des Elektronikgehäuses (18) angeordneten Leiterplatte (40) verbunden ist, und einen zweiten Steckverbinder (68) zum Anschluss einer elektrischen Anschlussleitung aufweist, wobei das Anschlusselement (62) vorzugsweise an einer Außenseite des Elektronikgehäuses (18) angeordnet ist und mit seinem ersten Steckverbinder (66) durch eine Öffnung (70) in einer Außenwandung (24) des Elektronikgehäuses (18) in dessen Inneres eingreift.

16. Pumpenaggregat nach Anspruch 15, **dadurch gekennzeichnet, dass** eine Außenwandung (24) des Elektronikgehäuses (18) eine nach innen gerichtete zweite Einbuchtung (64) aufweist, in welcher das Anschlusselement (62) angeordnet ist, wobei die Einbuchtung (64) vorzugsweise an einer Ecke des Elektronikgehäuses (18) gelegen ist.

17. Pumpenaggregat nach einem der vorangehenden Ansprüche, **dadurch gekennzeichnet, dass** der Wärmeverteiler (84) mit einem Erdungskontakt (106) mit einer im Inneren des Elektronikgehäuses (18) gelegenen Leiterplatte (40), insbesondere über eine Schraube (112) elektrisch leitend verbunden ist.

18. Pumpenaggregat nach einem der vorangehenden Ansprüche, **dadurch gekennzeichnet, dass** es sich um ein Umwälzpumpenaggregat, insbesondere mit einem nasslaufenden Antriebsmotor handelt.

## Claims

1. A pump assembly with an electric drive motor arranged in a stator housing (8) and with an electronics housing (18) arranged on the outer side of the stator housing (8),
wherein
the electronics housing (18) in a section of an outer wall (24; 128) which does not face the stator housing (8) comprises at least one opening (92; 144), at which a heat distributor (84; 140) arranged in the inside of the electronics housing (18) is situated, which closes the openings (92; 144) **characterised in that** the heat distributor (84; 140) in the region of the opening (92; 144) is exposed to the outer side or is covered maximally by 50% of its base surface.

2. A pump assembly according to claim 1, **characterised in that** the electronics housing (18) is situated on a radial side or axial side of the stator housing (8).

3. A pump assembly according to claim 1 or 2, **characterised in that** the electronics housing (18) is applied onto the stator housing (8) at the axial side and comprises at least one section (32) projecting in the radial direction beyond the outer periphery of the stator housing (8), and that the opening (92) is formed in an outer wall (24) of the electronics housing (18), said outer wall being situated on an axial side (24) of the electronics housing (18) which faces the stator housing (8), in the region of the projecting section (32).

4. A pump assembly according to one of the preceding claims, **characterised in that** a seal (94; 148) is arranged between the heat distributor (84; 142) and the outer wall surrounding the opening (92; 144).

5. A pump assembly according to one of the preceding claims, **characterised in that** the heat distributor (84; 142) is situated completely in the inside of the electronics housing (18) or extends outwards through the opening (92; 144) out of the inside of the electronics housing (18).

6. A pump assembly according to one of the preceding claims, **characterised in that** the heat distributor is designed as a moulded component (84) or as a formed part (144) of sheet metal.

7. A pump assembly according to one of the preceding claims, **characterised in that** a region (154) of the heat distributor (144) in the inside of the electronics housing is connected in a thermally conductive manner to at least one electronic component (138), wherein this region (154) is situated at least partly outside the outer contour of the opening (144).

8. A pump assembly according to one of the preceding claims, **characterised in that** the heat distributor (84) on the outer side of the electronics housing (18) is distanced to the stator housing (18).

9. A pump assembly according to one of the preceding claims, **characterised in that** the outer wall (24) of the electronics housing (18), in which the opening (92) is formed, comprises a step (100) which projects into the inside of the electronics housing (18) and in which the opening (92) is situated.

10. A pump assembly according to claim 9, **characterised in that** the step (100) on the outer side of the electronics housing (18) forms a first indentation, in which the heat distributor (84, 90) is situated.

11. A pump assembly according to one of the preceding claims, **characterised in that** the heat distributor (84; 140) is situated completely within the axial extension of a peripheral wall (26) of the electronics housing (18).

12. A pump assembly according to one of the preceding claims, **characterised in that** the heat distributor (84; 144) in the inside of the electronics housing (18) bears in a thermally conductive manner on at least one electronic component (86; 138) which is arranged on a circuit board (40; 136), wherein the circuit board (40; 136) extends preferably essentially parallel to the outer wall (24; 128) of the electronics housing (18), in which outer wall the opening (92; 144) is formed.

13. A pump assembly according to one of the claims 9 to 12, **characterised in that** a receiving space (122) is present laterally of the step (100) projecting into the inside of the electronics housing (18), in which receiving space the outer wall (24a) of the electronics housing (18) is distanced further in the axial direction (X) to a circuit board (40) situated in the electronics housing (18), than in the region of the step (100), and in which at least one electronic component (124) with a greater construction height is arranged.

14. A pump assembly according to claim 13, **characterised in that** the receiving space (122) is situated between the step (100) and a peripheral wall (26) of the electronics housing (18), preferably on a side of the step (100) which is away from the rotation axis (X) of the drive motor.

15. A pump assembly according to one of the preceding claims, **characterised by** a connection element (62) comprising a first plug connector (66) which is connected to a corresponding plug contact on a circuit board (40) arranged in the inside of the electronics housing (18), and a second plug connector (68) for the connection of an electrical connection lead, wherein the connection element (62) is preferably arranged on an outer side of the electronics housing (18) and with its first plug connector (66) engages through an opening (70) in an outer wall (24) of the electronics housing (18), into the inside of this electronics housing.

16. A pump assembly according to claim 15, **characterised in that** an outer wall (24) of the electronics housing (18) comprises an inwardly directed second indentation (64), in which the connection element (62) is arranged, wherein the indentation (64) is preferably situated at a corner of the electronics housing (18).

17. A pump assembly according to one of the preceding claims, **characterised in that** the heat distributor (84) is electrically conductively connected with an earth contact (106) to a circuit board (40) situated on the inside of the electronics housing (18), in particular via a screw (112).

18. A pump assembly according to one of the preceding claims, **characterised in that** it is the case of a circulation pump assembly, in particular with a wet-running drive motor.

## Revendications

1. Groupe motopompe pourvu d'un moteur d'entraînement électrique disposé dans un carter de stator (8) et d'un boîtier électronique (18) disposé sur la face extérieure du carter de stator (8), dans lequel le boîtier électronique (18) présente, dans une partie d'une paroi extérieure (24; 128) non tournée vers le carter de stator (8), au moins une ouverture (92; 144) au niveau de laquelle est situé un dissipateur de chaleur (84; 140) disposé à l'intérieur du boîtier électronique (18) et qui ferme l'ouverture (92; 144), **caractérisé en ce que** le dissipateur de chaleur (84; 140) est exposé vers la face extérieure dans la région de l'ouverture (92; 144) ou est couvert au maximum à 50% de sa surface de base.

2. Groupe motopompe selon la revendication 1, **caractérisé en ce que** le boîtier électronique (18) est situé sur une face radiale ou une face axiale du carter de stator (8).

3. Groupe motopompe selon la revendication 1 ou 2, **caractérisé en ce que** le boîtier électronique (18) est rapporté sur le carter de stator (8) côté axial et présente au moins une partie (32) faisant saillie de la périphérie extérieure du carter de stator (8) en direction radiale et **en ce que** l'ouverture (92) est réalisée dans une paroi extérieure (24) du boîtier électronique (18), laquelle est située sur une face axiale (24) du boîtier électronique (18) tournée vers le carter de stator (8) dans la région de la partie (32) en saillie.

4. Groupe motopompe selon l'une des revendications précédentes, **caractérisé en ce qu'**un joint d'étanchéité (94; 148) est disposé entre le dissipateur de chaleur (84; 142) et la paroi extérieure entourant l'ouverture (92; 144).

5. Groupe motopompe selon l'une des revendications précédentes, **caractérisé en ce que** le dissipateur de chaleur (84; 142) est situé entièrement à l'intérieur du boîtier électronique (18) ou s'étend vers l'extérieur au travers de l'ouverture (92; 144) depuis l'intérieur du boîtier électronique (18).

6. Groupe motopompe selon l'une des revendications précédentes, **caractérisé en ce que** le dissipateur de chaleur (84; 142) est réalisé sous la forme d'une pièce coulée (84) ou d'une pièce moulée (140) en tôle.

7. Groupe motopompe selon l'une des revendications précédentes, **caractérisé en ce qu'**une région (154) du dissipateur de chaleur (140) à l'intérieur du boîtier électronique est reliée de manière ther-mo-conductrice à au moins un composant électronique (138), cette région (154) étant située au moins en partie à l'extérieur du contour extérieur de l'ouverture (144).

8. Groupe motopompe selon l'une des revendications précédentes, **caractérisé en ce que** le dissipateur de chaleur (84) sur la face extérieure du boîtier électronique (18) est espacé du carter de stator (18).

9. Groupe motopompe selon l'une des revendications précédentes, **caractérisé en ce que** la paroi extérieure (24) du boîtier électronique (18), dans laquelle est réalisée l'ouverture (92), présente un gradin (100) faisant saillie à l'intérieur du boîtier électronique (18), dans lequel est située l'ouverture (92).

10. Groupe motopompe selon la revendication 9, **caractérisé en ce que** le gradin (100) sur la face extérieure du boîtier électronique (18) forme une première indentation dans laquelle est situé le dissipateur de chaleur (84).

11. Groupe motopompe selon l'une des revendications précédentes, **caractérisé en ce que** le dissipateur de chaleur (84; 140) est entièrement situé à l'intérieur de l'étendue axiale d'une paroi périphérique (26) du boîtier électronique (18).

12. Groupe motopompe selon l'une des revendications précédentes, **caractérisé en ce que** le dissipateur de chaleur (84; 140) à l'intérieur du boîtier électronique (18) repose de manière thermo-conductrice contre au moins un composant électronique (86; 138) disposé sur une carte de circuits imprimés (40; 136), la carte de circuits imprimés (40; 136) s'étendant, de préférence, de manière sensiblement parallèle à la paroi extérieure (24; 128) du boîtier électronique (18) dans laquelle est réalisée l'ouverture (92; 144).

13. Groupe motopompe selon l'une des revendications 9 à 12, **caractérisé en ce que**, sur le côté du gradin (100) faisant saillie à l'intérieur du boîtier électronique (18), est prévu un logement (122) dans lequel la paroi extérieure (24a) du boîtier électronique (18) est plus éloignée en direction axiale (X) d'une carte de circuits imprimés (40) située dans le boîtier électronique (18) que dans la région du gradin (100) et dans lequel est disposé au moins un composant électronique (124) ayant un plus grand encombrement en hauteur.

14. Groupe motopompe selon la revendication 13, **caractérisé en ce que** le logement (122) est situé entre le gradin (100) et une paroi périphérique (26) du boîtier électronique (18), de préférence sur un côté du gradin (100) opposé à l'axe de rotation (X) du moteur d'entraînement.

15. Groupe motopompe selon l'une des revendications précédentes, **caractérisé par** un élément de raccordement (62) qui comporte un premier connecteur (66), lequel est relié à un contact enfichable correspondant sur une carte de circuits imprimés (40) disposée à l'intérieur du boîtier électronique (18), et un second connecteur (68) pour le raccordement d'un câble de connexion électrique, l'élément de raccordement (62) étant disposé, de préférence, sur une face extérieure du boîtier électronique (18) et venant en prise avec son premier connecteur (66) à travers une ouverture (70) pratiquée dans une paroi extérieure (24) du boîtier électronique (18) à l'intérieur de celui-ci.

16. Groupe motopompe selon la revendication 15, **caractérisé en ce qu'**une paroi extérieure (24) du boîtier électronique (18) présente une seconde indentation (64) orientée vers l'intérieur, dans laquelle est disposé l'élément de raccordement (62), l'indentation (64) étant située, de préférence, sur un angle du boîtier électronique (18).

17. Groupe motopompe selon l'une des revendications précédentes, **caractérisé en ce que** le dissipateur de chaleur (84) est relié d'une manière électro-conductrice à un contact de mise à la terre (106) avec une carte de circuits imprimés (40) située à l'intérieur du boîtier électronique (18), en particulier par l'intermédiaire d'une vis (112).

18. Groupe motopompe selon l'une des revendications précédentes, **caractérisé en ce qu'**il s'agit d'un groupe motopompe de circulation, notamment pourvu d'un moteur d'entraînement fonctionnant en milieu humide.
